# EUROPEAN PATENT APPLICATION

(11) **EP 4 597 270 A1**
(43) Date of publication of application: **06.08.2025**
(21) Application number: 23871624.5
(22) Date of filing: 28.08.2023
(51) Int. Cl.: G06F 3/03, B43K 7/00, B43K 7/12, B43K 21/00, B43K 24/10, B43K 29/00

(54) **ACTIVE STYLUS PEN**

(30) Priority: 26.09.2022 JP 2022152317; 26.09.2022 JP 2022152318
(71) Applicant: ZEBRA CO., LTD., Shinjuku-ku Tokyo 162-8562 (JP)
(72) Inventor: TANAKA Yoshiaki, Tokyo 162-8562 (JP)
(74) Representative: Arnold & Siedsma
(86) International application number: PCT/JP2023/030849
(87) International publication number: WO 2024/070383

(57) **Abstract**

The task is to provide an active stylus pen that can write on a written object, such as paper, like a ballpoint pen or a mechanical pencil.

An active stylus pen transmitting a signal to a chip provided at a tip of a refill of a ballpoint pen.

## Description

### TECHNICAL FIELD

The present invention relates to an active stylus pen used as an input device of a touch panel equipped in a notebook PC, a tablet PC, a smartphone, or the like.

### BACKGROUND ART

In the related art, an active stylus pen is used as an input device of a touch panel equipped in an electronic device such as a notebook PC, a tablet PC, or a smartphone, and a pen tip is formed to be thin, and thus characters can be written or pictures can be drawn on the touch panel.

### (see PTL 1)

### CITATION LIST

### PATENT LITERATURE

[PTL 1] International Publication WO 2020/148977
[PTL 2] Japanese Patent Application Publication 2016-95833
[PTL 3] Registered Utility Model No. 3181323
[PTL 4] Japanese Patent Application Publication 2021-2097 (see Fig. 7)
[PTL 5] Japanese Patent 6801147

### SUMMARY OF INVENTION

### TECHNICAL PROBLEM

The active stylus pen can be used to write characters or draw pictures on a touch panel equipped in an electronic device in the same manner as writing characters or drawing pictures on written object such as a paper or the like with a ballpoint pen or a mechanical pencil. However, the electronic device can be used only as an input device of an electronic device, and it is naturally impossible to write on a written object such as paper, as in a writing utensil such as a ballpoint pen or a mechanical pencil.

However, in a case where an electronic device such as a tablet PC is used, there is also a case where writing on a written object such as paper is performed at the same time. In such a case, for example, it is necessary to perform writing on a tablet PC or the like and writing on paper or the like by replacing the active stylus pen with a ballpoint pen or conversely replacing the ballpoint pen with the active stylus pen, and it is troublesome to replace a plurality of pens.

Therefore, an object of the present invention is to provide an active stylus pen that can be used for writing on a written object such as a paper or the like, like a ballpoint pen or a mechanical pencil.

### SOLUTION TO PROBLEM

In order to solve the above-described problem, the present invention includes the following configurations:
an active stylus pen transmitting a signal to a chip provided at a tip of a refill of a ballpoint pen.

### ADVANTAGEOUS EFFECTS OF INVENTION

In the present invention, by transmitting a signal to a conductive (an electrically conductive) member provided at a tip of a writing utensil, one active stylus pen can be used as an input device of a touch panel equipped in an electronic device and as a writing utensil for writing on a written object such as a paper or the like.

### BRIEF DESCRIPTION OF DRAWINGS

Fig. 1 is a longitudinal cross-sectional view of an active stylus pen 1 of Embodiment 1 according to the present invention.
Fig. 2 is a cross-sectional view of an ink tank 31 of an active stylus pen 1 of Modification Examples 1 and 3 of Embodiment 1 of the present invention.
Fig. 3 is a cross-sectional view of an ink tank 31 of an active stylus pen 1 of Modification Example 2 of Embodiment 1 according to the present invention.
Fig. 4 is a cross-sectional view of an ink tank 31 of an active stylus pen 1 of Modification Example 4 of Embodiment 1 of the present invention.
Fig. 5 is a longitudinal cross-sectional view of a tip side of the active stylus pen 1 of Embodiment 2 according to the present invention.
Fig. 6 is a longitudinal cross-sectional view of a tip side of an active stylus pen 1 of Modification Example 9 of Embodiment 2 of the present invention.
Fig. 7 is a longitudinal cross-sectional view of an active stylus pen 1 of Embodiment 3 according to the present invention.
Fig. 8 is a side view of a main part of a pen-type input device 1' of Embodiment 7 according to the present invention.
Fig. 9 is a side view of a main part of a pen-type input device 1' of Embodiment 8 according to the present invention.
Fig. 10 is a side view of a main part of a pen-type input device 1' of Embodiment 9 according to the present invention.
Fig. 11 is a longitudinal cross-sectional view showing a chip 32 of Embodiment 14 according to the present invention.
Fig. 12 is an enlarged longitudinal cross-sectional view of main parts showing a state in which a chip 32 of Embodiment 14 according to the present invention touches a written surface substantially perpendicularly.
Fig. 13 shows a chip body 321 of a chip 32 of Embodiment 14 according to the present invention, and is a cross-sectional view taken along the line (V) - (V) in Fig. 4.
Fig. 14 is a longitudinal cross-sectional view of a main part of a chip 32 of Embodiment 14 according to the present invention. Fig. 14 at (a) shows a state in which a transfer ball is rolling on a written surface, and Fig 14 at (b) shows a state in which the transfer ball is sliding on the written surface with a relatively low dynamic friction coefficient without rolling.
Fig. 15 is a table showing results of a measurement experiment in Embodiment 14.
Fig. 16 is a table showing a continuation of the results of the measurement experiment in Embodiment 14.

### DESCRIPTION OF EMBODIMENTS

Hereinafter, an active stylus pen 1 according to an embodiment of the present invention will be described with reference to the drawings.

In the following description, the same reference numerals in different figures denote the parts having the same functions, and the duplicated description thereof will be omitted as appropriate.

In the present specification, the term "writing utensil" means a tool that can write (or write) characters, symbols, figures, drawings, and the like on a written object, such as paper, with ink or the like.

In addition, a side of the long active stylus pen 1 on which the chip 32 is disposed is referred to as a front side, and a side opposite to the front side is referred to as a rear side.

In addition, a direction in which a center line of a tubular case 2 in the longitudinal direction extends is referred to as an axial direction, a direction in which a periphery of the center line of the tubular case 2 is rotated is referred to as a circumferential direction, a diameter direction of the tubular case 2 orthogonal to the center line of the tubular case 2 is referred to as a radial direction, a direction separated from the center line of the tubular case 2 along the radial direction is referred to as an outside of radial direction, and a direction approaching the center line of the tubular case 2 along the radial direction is referred to as an inside of radial direction.

### [Embodiment 1]

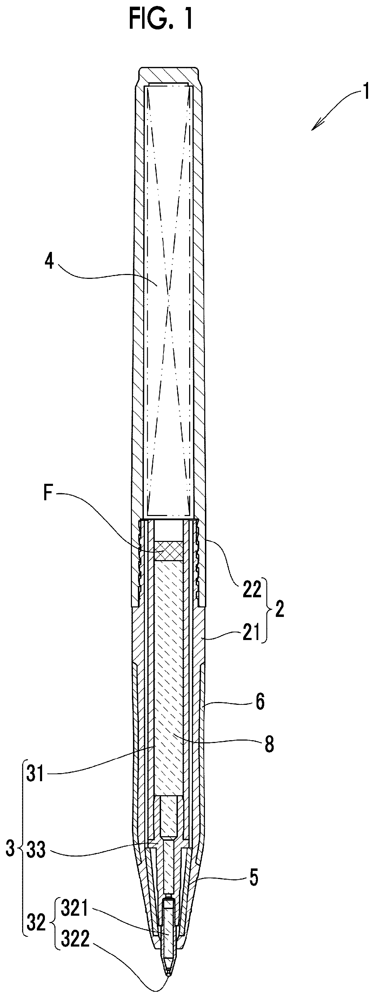

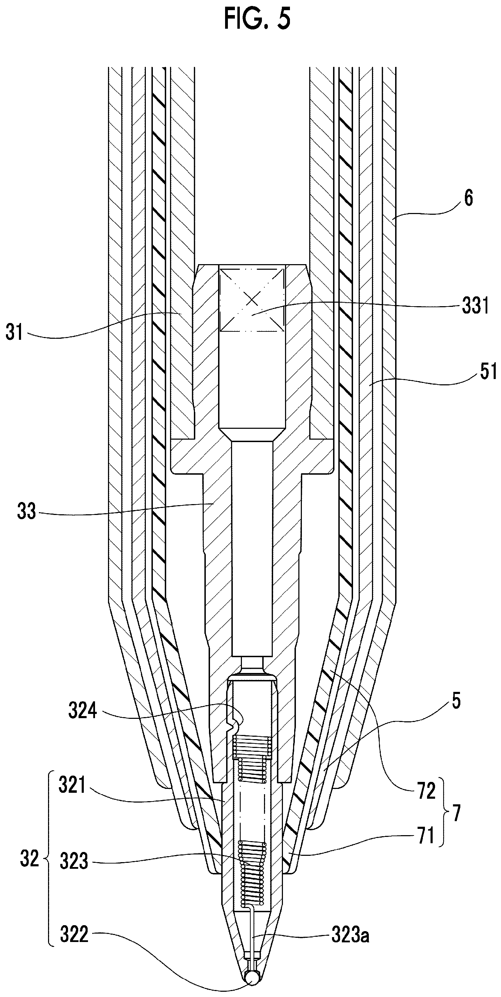

Fig. 1 is a longitudinal cross-sectional view of an active stylus pen 1 in Embodiment 1 of the present invention. In addition, the structure of a chip 32 and a connecting member 33 shown in Fig. 5 is common to the structure of the chip 32 and the connecting member 33 of Embodiment 1. In Fig. 1, a spring 323 and a check valve 331, which will be described later, are omitted.

The active stylus pen 1 includes a tubular case 2, a refill 3 of a ballpoint pen that is stored in the tubular case 2, and an electric circuit portion 4.

The tubular case 2 is divided into two members, the front side case 21 and the rear side case 22, near the center portion in the axial direction. The front side case 21 and the rear side case 22 are attachably and detachably coupled to each other by screws.

The tubular case 2 may be divided into three or more members. In addition, as means for separably coupling a plurality of members, any other engaging means, fitting means, and the like may be employed in addition to the screw.

The refill 3 is stored to be replaceable in the front side case 21.

The refill 3 has an ink tank 31 that stores ink, a chip 32 that is provided at a tip portion of the refill 3, and a connecting member 33 that connects the ink tank 31 and the chip 32. The chip is also referred to as a ballpoint pen chip.

The ink tank 31 is filled with the ink 8 and grease F as a follower in a rear end portion of the ink 8.

The chip 32 includes a substantially tubular chip body 321 and a ball 322 that is rotatably held at a tip of the chip body 321.

As shown in Fig. 5, a spring 323 is disposed in the chip body 321. The spring 323 is disposed between the lock portion 324 provided on the rear end portion side of the chip body 321 and the ball 322, and is urged to press the ball 322 to the tip side by a rod-like portion 323a of the spring 323 on the tip side. The spring 323 urges the ball 322 such that the ball 322 is in close contact with the tip portion of the chip body 321 and prevents ink from leaking in a case where the ball 322 is not writing. During writing, the ball 322 is separated from the tip side of the chip body 321 against the urging force of the spring 323 due to the writing pressure, so that writing with the ink 8 is possible.

The specific configuration of the means for preventing ink leakage is not limited to the one using a spring, and various modification examples can be considered for the bonding between the member such as the spring and the chip body 321 or the ball 322.

In addition, the spring 323 is not an essential configuration and may be omitted.

Further, as shown in Fig. 5, a check valve 331 is disposed at a rear end portion of the connecting member 33 so that the ink 8 does not flow back from the chip 32 to the ink tank 31. The active stylus pen 1 is often used with the up and down reversed, that is, with the chip 32 side facing upward, compared to a normal ballpoint pen, and the check valve 331 can exhibit a greater effect.

The connecting member 33 is not necessary, and the chip 32 may be attached to the ink tank 31. In this case, the check valve 331 may be disposed in the ink tank 31 or the chip 32. In addition, as the ink backflow prevention means, in addition to the above-described check valve, a pressurizing mechanism that pressurizes the inside of the ink tank 31 may be provided, or the pressurized ink tank 31 itself may be attached.

In addition, the check valve 331 is not an essential configuration and may be omitted.

The electric circuit portion 4 is stored in the rear side case 22.

The electric circuit portion 4 is equipped with a circuit that generates an electric signal for generating an electric field at the pen tip of the active stylus pen 1, a circuit that detects various states (a writing pressure applied to the core body, an inclination of the core body and the active stylus pen 1, and the like) of the active stylus pen 1, a circuit and an antenna for performing communication with an electronic device such as a notebook PC, a battery as a power supply that supplies power to these circuits, and the like.

A switch (not shown) for turning the active stylus pen 1 ON/OFF is provided at any position of the rear side case 22.

The ink tank 31 constituting the refill 3, the chip body 321 and the ball 322 constituting the chip 32, and the connecting member 33 are all formed of a metal which is a conductive member, for example, stainless steel or aluminum. Accordingly, the electric signal can be conducted from the rear end portion of the ink tank 31 to the ball 322.

In addition, the peripheral electrode 5 formed of a conductive film is disposed at a tip portion of the front side case 21. The peripheral electrode 5 does not need to be a film-like shape, and may have other shapes and structures such as a linear shape and a coil shape.

A rear end portion of the ink tank 31 is connected to a signal output terminal (not shown) of the electric circuit portion 4, and the peripheral electrode 5 is connected to another signal output terminal (not shown) of the electric circuit portion 4 via an appropriate conductor as necessary, and a signal from the electric circuit portion 4 is transmitted to the chip body 321, the ball 322, and the peripheral electrode 5.

As a result, an electric field is generated around the chip body 321 and the ball 322, and is detected by the sensor of the touch panel. In addition, the peripheral electrode 5 also transmits and receives a signal to and from the sensor of the touch panel.

The electrical connection between the ink tank 31 and the peripheral electrode 5 and the electric circuit portion 4 can be appropriately configured. In the present Embodiment 1, in order to enable the refill 3 to be replaced, the electrical connection between the ink tank 31 and the peripheral electrode 5 and the electric circuit portion 4 is configured to be detachable as the tubular case 2 that can be separated into two cases, the front side case 21 and the rear side case 22. For example, a configuration in which a connection terminal provided in the electric circuit portion 4 is in direct contact with a terminal provided in the ink tank 31 and the peripheral electrode 5, and a configuration in which a connection terminal provided in the electric circuit portion 4 and a terminal provided in the ink tank 31 and the peripheral electrode 5 are engaged with each other to be engageable/disengageable can be considered.

In a case where the refill 3 is not replaceable, it is not necessary to make the electrical connection between the ink tank 31 and the peripheral electrode 5 and the electric circuit portion 4 detachable, and it is not necessary to make the configuration in which the tubular case 2 can be separated into two cases of the front side case 21 and the rear side case 22.

A ground electrode 6 formed of a conductive film is provided around the front side case 21 from a rear side of the tip portion to near an intermediate portion (a portion where a finger comes into contact in a case where the active stylus pen 1 is used).

Then, the ground electrode 6 with which the finger comes into contact in a case of using the active stylus pen 1 is grounded, and the rear from the tip side of the ground electrode 6 is electrostatically shielded, and in a case of transmitting and receiving signals of the chip body 321, the ball 322, and the peripheral electrode 5, signal leakage is prevented, and noise from the outside is reduced. As a result, an effect that transmission and reception between the active stylus pen 1 and the sensor of the touch panel can be reliably performed can be obtained.

The three conductive members, that is, the chip body 321 and the ball 322 described above, the peripheral electrode 5, and the ground electrode 6 are insulated from each other.

In a case of a writing target where a surface of a written object such as a paper or the like is equal to or coarser than a predetermined roughness, the active stylus pen 1 as described above can be used for writing with a ballpoint pen. However, since the ball is configured to slip on a smooth surface such as a touch panel and cannot be used for writing, the touch panel surface is not stained with ink.

That is, the active stylus pen 1 can be used as an input device of a touch panel equipped in an electronic device or as a writing utensil for writing on a written object such as a paper or the like.

In order to make it difficult for the ink to adhere to a smooth surface such as a touch panel, the chip 32 of the refill 3 used in the active stylus pen 1 is designed such that the ball 322 is less likely to roll than the normal refill 3. For example, it is considered to make the surface of the ball 322 rougher than usual, to make the movable length of the refill 3 in the longitudinal direction in the ball storage portion of the ball 322 smaller than usual, or to make the contact area between the ball 322 and the inner surface of the ball storage portion smaller than usual.

However, depending on the combination of the refill 3 and the touch panel, it cannot be said that there is no risk of the ink adhering, and caution is required in use.

### [Modification Example 1]

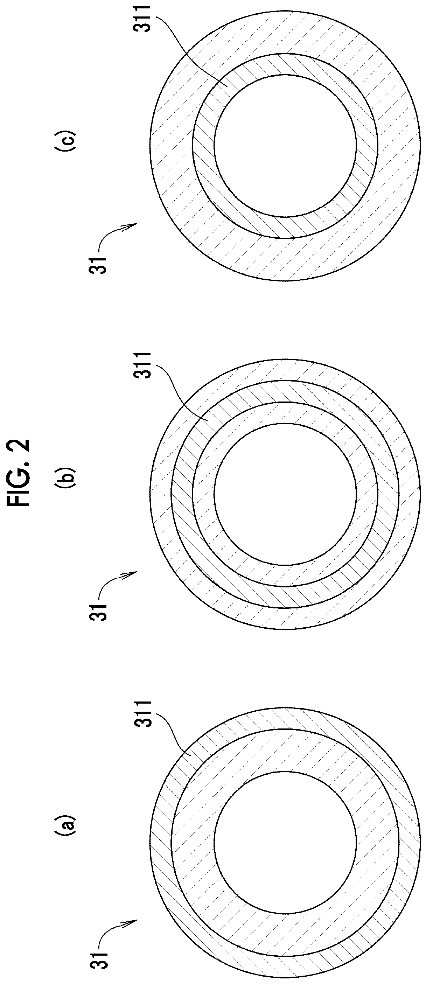

Fig. 2 is a cross-sectional view of an ink tank 31 of an active stylus pen 1 of Modification Examples 1 and 3 of Embodiment 1 according to the present invention.

In Embodiment 1 described above, the entire ink tank 31 is formed of a metal which is a conductive member. However, in Modification Example 1, a layer 311 of a conductive metal material is formed on an inner wall surface and/or an outer wall surface of the ink tank 31 formed of a non-conductive material, for example, polypropylene or polyethylene which is a non-conductive resin, or a layer 311 of a conductive metal material is formed in a wall of the ink tank 31, so that the ink tank 31 is configured to impart conductivity.

In Fig. 2, in a case where the layer 311 is a layer of a metal material having conductivity, Fig. 2 at (a) shows a state in which a layer of a metal material having conductivity is disposed on the outer wall surface of the ink tank 31, Fig. 2 at (b) shows a state in which a layer of a metal material having conductivity is disposed in the wall of the ink tank 31, and Fig. 2 at (c) shows a state in which a layer of a metal material having conductivity is disposed on the inner wall surface of the ink tank 31.

The same applies to the connecting member 33.

### [Modification Example 2]

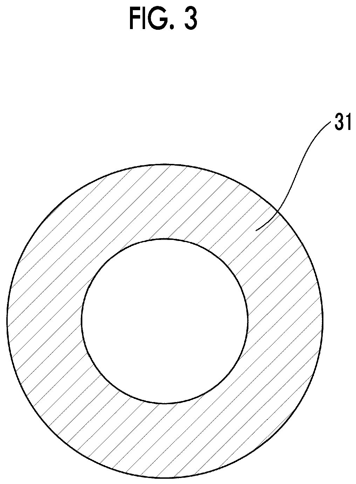

Fig. 3 is a cross-sectional view of an ink tank 31 of an active stylus pen 1 of Modification Example 2 of Embodiment 1 according to the present invention.

In the above-described Embodiment 1 and Modification Example 1, the ink tank 31 has a light shielding property, and the usage status of the ink (remaining amount of ink) in the ink tank 31 cannot be checked from the outside.

Therefore, in Modification Example 2, the entire ink tank 31 is formed of a material having translucency and conductivity, for example, a conductive resin having predetermined translucency, such as conductive polyacetal or a conductive PEEK resin, or a conductive metal oxide having predetermined translucency, such as indium tin oxide (ITO), instead of the metal which is the conductive member. The translucency need only be translucency such that the remaining amount of the ink in the ink tank 31 can be checked, and the degree thereof can be appropriately designed in consideration of the concentration, color, and the like of the ink stored in the ink tank 31.

Fig. 3 is a view in which the ink tank 31 is formed of a translucent and conductive material.

The same applies to the connecting member 33.

### [Modification Example 3]

Fig. 2 is a cross-sectional view of an ink tank 31 of an active stylus pen 1 of Modification Examples 1 and 3 of Embodiment 1 according to the present invention.

In Modification Example 2 described above, the entire ink tank 31 is formed of a translucent and conductive material. However, in Modification Example 3, a layer 311 of a translucent and conductive material used in Modification Example 2 is formed on an inner wall surface and/or an outer wall surface of the ink tank 31 formed of a translucent and non-conductive material, for example, polypropylene or polyethylene which is a translucent and non-conductive resin, or a layer 311 of a translucent and conductive material is formed in a wall of the ink tank 31, so that the ink tank 31 is configured to be imparted with conductivity.

In Fig. 2, in a case where the layer 311 is a layer of a material having translucency and conductivity, Fig. 2 at (a) shows a state in which a layer of a material having translucency and conductivity is disposed on an outer wall surface of the ink tank 31, Fig. 2 at (b) shows a state in which a layer of a material having translucency and conductivity is disposed in a wall of the ink tank 31, and Fig. 2 at (c) shows a state in which a layer of a material having translucency and conductivity is disposed on an inner wall surface of the ink tank 31.

The same applies to the connecting member 33.

### [Modification Example 4]

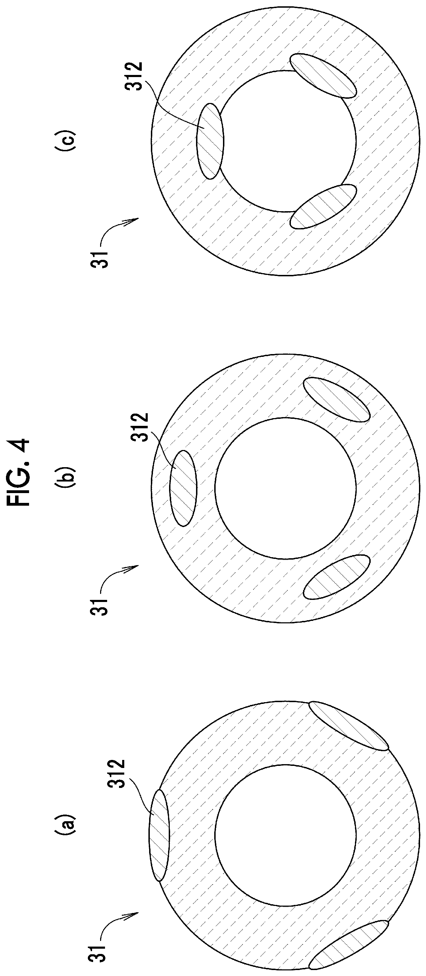

Fig. 4 is a cross-sectional view of the ink tank 31 of the active stylus pen 1 of Modification Example 4 of Embodiment 1 according to the present invention.

In Modification Example 3 described above, as the ink tank 31, the layer 311 of a translucent and conductive material is formed on the inner wall surface and/or the outer wall surface of the ink tank 31 formed of a translucent and non-conductive material, or the layer 311 of a translucent and conductive material is formed in the wall of the ink tank 31. However, in Modification Example 4, a non-translucent or low-translucent and conductive material is used so that the usage status of the ink (the remaining amount of the ink) in the ink tank 31 can be checked from the outside.

The ink tank 31 may be formed of a layer of a non-translucent or low-translucent and conductive material in a part of the circumference, for example, one or more linear or band shapes, since it is sufficient that the ink tank 31 can conduct an electric signal from the rear end portion to the tip portion. In addition, the shape of the layer is not limited to a simple shape such as a linear shape or a band shape, and may have any design such as a pattern, characters, or symbols.

In this configuration, the usage status of the ink (the remaining amount of the ink) in the ink tank 31 can be checked from the outside in a portion where the linear or band-shaped layer 312 of the non-translucent or low-translucent and conductive material is not formed.

In Fig. 4, in a case where the linear or band-shaped layer 312 is a layer of a non-translucent or low-translucent and conductive material, Fig. 4 at (a) shows a state where the linear or band-shaped layer 312 of a non-translucent or low-translucent and conductive material is disposed on the outer wall surface of the ink tank 31, Fig. 4 at (b) shows a state where the linear or band-shaped layer 312 of a non-translucent or low-translucent and conductive material is disposed in the wall of the ink tank 31, and Fig. 4 at (c) shows a state where the linear or band-shaped layer 312 of a non-translucent or low-translucent and conductive material is disposed on the inner wall surface of the ink tank 31.

The same applies to the connecting member 33.

Furthermore, the layer of the translucent and conductive material in Modification Example 3 described above may also be formed on a part of the circumference.

In this case, in Fig. 4, in a case where the linear or band-shaped layer 312 is a layer of a material having translucency and conductivity, Fig. 4 at (a) shows a state in which a linear or band-shaped layer of a material having translucency and conductivity is disposed on an outer wall surface of the ink tank 31, Fig. 4 at (b) shows a state in which a linear or band-shaped layer of a material having translucency and conductivity is disposed in a wall of the ink tank 31, and Fig. 4 at (c) shows a state in which a linear or band-shaped layer of a material having translucency and conductivity is disposed on an inner wall surface of the ink tank 31.

### [Modification Example 5]

In Modification Example 4 described above, a layer of a non-translucent or low-translucent and conductive material is formed on the inner wall and/or the outer wall of the ink tank 31 formed of a translucent non-conductive material as the ink tank 31, or a layer of a non-translucent or low-translucent and conductive material is formed in the inner part of the ink tank 31. However, in Modification Example 5, the ink tank 31 is configured to impart conductivity to the ink tank 31 by containing a conductive filler (a metal filler, a carbon filler, or the like), a conductive fiber (a metal fiber, a carbon fiber, or the like), conductive particles (metal particles, carbon particles, or the like), or the like in the wall of the ink tank 31.

As the conductive filler, the conductive fiber, the conductive particles, and the like, a translucent material is preferable, but even in a case where a non-translucent or low-translucent material is used, a conductive ink tank 31 having predetermined translucency can be formed by adjusting the content, the size, and the like.

The same applies to the connecting member 33.

### [Modification Examples 2' to 5']

In Modification Examples 2 to 5, it is more convenient in a case where the usage status of the ink (the remaining amount of the ink) in the ink tank 31 can be checked from the outside of the front side case 21.

For this purpose, it is necessary to make the front side case 21 and the ground electrode 6 translucent. The front side case 21 may be formed of a translucent resin, but the ground electrode 6 needs not only translucency but also conductivity.

Therefore, the translucent ground electrode 6 can be formed by forming a conductive resin having a predetermined translucency, such as conductive polyacetal or a conductive PEEK resin, which is a translucent and conductive material used in the ink tank 31 in Modification Examples 2 and 3, or a conductive metal oxide having a predetermined translucency, such as indium tin oxide (ITO), or, as in Modification Examples 4, by forming a translucent resin layer containing a non-translucent, low-translucent, or translucent conductive material formed in a linear or band shape on a portion of the circumference of the front side case 21, or by forming a translucent resin layer containing a conductive filler (a metal filler, a carbon filler, or the like), a conductive fiber (a metal fiber, a carbon fiber, or the like), or conductive particles (metal particles, carbon particles, or the like) used in the ink tank 31 in Modification Example 5.

The translucency need only be translucency such that the remaining amount of the ink in the ink tank 31 can be checked, and the degree thereof can be appropriately designed in consideration of the concentration, color, and the like of the ink stored in the ink tank 31.

### [Embodiment 2]

In the above-described Embodiment 1 and each modification example thereof, the ink tank 31 or the connecting member 33 itself is imparted with conductivity, and an electric signal is transmitted to the chip 32 via the ink tank 31 or the connecting member 33 itself.

Instead of this, a member that transmits an electric signal to the chip 32 may be disposed in addition to the ink tank 31 and the connecting member 33.

Fig. 5 is a longitudinal cross-sectional view of the active stylus pen 1 of Embodiment 2 according to the present invention on a tip side.

Unlike the above-described Embodiment 1 and each modification example thereof, the ink tank 31 and the connecting member 33 are formed of a translucent and insulating resin.

Then, a signal transmitting member 7 that transmits an electric signal is disposed between an inner surface of the front side case 21 and an outer surface of the refill 3. The signal transmitting member 7 has a chuck 71 of which a tip portion is in contact with the chip body 321 of the chip 32, and a conduction portion 72 that is formed of metal, which is a conductive member, for conducting to the electric circuit portion 4 is provided behind the chuck 71.

The signal transmitting member 7 does not need to be integrally formed with the inner surface of the front side case 21 as shown in Fig. 5, and may be disposed in a gap between the inner surface of the front side case 21 and the outer surface of the refill 3.

The chuck 71 is formed in an annular shape to always be in contact with the periphery of the chip body 321, and the conduction portion 72 is formed in a cylindrical shape that continuously surrounds the outer periphery of the refill 3 behind the chuck 71.

The shape of the chuck 71 is not limited to an annular shape. For example, any shape may be used as long as it is a shape that comes into contact with the periphery of the chip body 321, such as a shape in which a hole through which the chip body 321 is passed is provided at an apex portion of a conical member, a shape in which a hole through which the chip body 321 is passed is provided at an apex portion of a conical member and a cutout in the axial direction is provided to divide the conical member into a plurality of members, or a shape in which a cutout in the axial direction is provided in a cylindrical member to divide the cylindrical member into a plurality of members. In addition, it is not necessary to be in contact with the entire periphery of the chip body 321, and a member that is in contact with a part of the periphery of the chip body 321 may be provided, for example, one claw-shaped member may be provided.

The electrical connection between the conduction portion 72 and the electric circuit portion 4 is the same as the electrical connection between the ink tank 31 and the peripheral electrode 5 and the electric circuit portion 4.

In a signal transmitting member 7 shown in Fig. 5, a chuck 71 and a conduction portion 72 are integrally formed, and the signal transmitting member 7 having the chuck 71 and the conduction portion 72 is integrally formed on an inner surface of the front side case 21.

The present invention is not limited thereto, and the chuck 71 and the conduction portion 72 may be formed as separate bodies, or the chuck 71 and the conduction portion 72 may be disposed between the inner surface of the front side case 21 and the outer surface of the refill 3 as separate bodies from the front side case 21.

The chuck 71 may be any conductive member, and may be a conductive resin, a conductive rubber, a resin or rubber containing a conductive material, or the like, in addition to a metal.

Since the conduction portion 72 is light-shielding and the usage status of the ink (the remaining amount of the ink) in the ink tank 31 cannot be checked from the outside by the conduction portion 72, the ink tank 31 itself does not need to be translucent and may be formed of a non-translucent or low-translucent material.

The peripheral electrode 5 and the ground electrode 6 are the same as those in Embodiment 1, and the peripheral electrode 5 is disposed at the tip portion of the front side case 21, and the ground electrode 6 is provided around the front side case 21.

In Embodiment 2, the peripheral electrode 5 has an extension portion 51 that extends to the rear in order to be connected to the electric circuit portion 4. The peripheral electrode 5 having the extension portion 51 may be employed in Embodiment 1 and each modification example thereof.

### [Modification Example 6]

In the above-described Embodiment 2, even in a case where the conduction portion 72 is light-shielding and the ink tank 31 is formed of a translucent resin or the like, the usage status of the ink (the remaining amount of the ink) in the ink tank 31 cannot be checked from the outside of the front side case 21.

Therefore, the conduction portion 72 is formed of a material that is translucent and conductive, for example, a conductive resin having predetermined translucency, such as conductive polyacetal or a conductive PEEK resin, or a conductive metal oxide having predetermined translucency, such as indium tin oxide (ITO), by replacing the conduction portion 72 with a metal so that the ink remaining amount in the ink tank 31 can be checked.

In Modification Example 6, the chuck 71 and the conduction portion 72 may be integrated with each other or may be separate from each other, and the chuck 71 and the conduction portion 72 may be integrated with the front side case 21 or may be separate from each other.

In this configuration, the usage status of the ink (the remaining amount of the ink) in the ink tank 31 can be checked from the outside of the front side case 21 via the conduction portion 72 having translucency.

In this case, in a case where the extension portion 51 of the peripheral electrode 5 and the ground electrode 6 are also light-shielding, the viewing of the usage status of the ink (remaining amount of ink) in the ink tank 31 from the outside of the front side case 21 is hindered.

Therefore, the same ground electrode 6 as the translucent ground electrode 6 used in Modification Examples 2' to 5' is used, and the extension portion 51 of the peripheral electrode 5 can also be formed of a translucent resin having the same properties as the translucent ground electrode 6, which is a translucent and conductive material used in the ink tank 31 in Modification Examples 2 and 3, such as a conductive polyacetal, a conductive PEEK resin, a conductive resin having a predetermined translucency, such as a conductive metal oxide having a predetermined translucency, such as indium tin oxide (ITO), or the like, as in Modification Example 4, by forming a conduction portion having a linear shape, a band shape, or the like is formed of a non-translucent, low-translucent, or light-transmitting material on a part of the circumference of the extension portion 51 formed of a non-conductive material, or the like, or of a translucent resin layer containing a conductive filler (a metal filler, a carbon filler, or the like), a conductive fiber (a metal fiber, a carbon fiber, or the like), conductive particles (metal particles, carbon particles, or the like), or the like, which is used in the ink tank 31 in Modification Example 5. As a result, the extension portion 51 having translucency can be formed.

The translucency need only be translucency such that the remaining amount of the ink in the ink tank 31 can be checked, and the degree thereof can be appropriately designed in consideration of the concentration, color, and the like of the ink stored in the ink tank 31.

### [Modification Example 7]

In Modification Example 6 described above, the conduction portion 72 is formed of a translucent and conductive material, but in Modification Example 7, a non-translucent or low-translucent and conductive material is used, and at least a portion corresponding to the ink tank 31 is configured to be formed in a part of the circumference, for example, in one or more linear or band shapes. In addition, the conduction portion 72 is not limited to a simple shape such as a linear shape or a band shape, and may have any design such as a pattern, a character, or a symbol.

In Modification Example 7, the chuck 71 and the conduction portion 72 may be integrated with each other or may be separate from each other, and the chuck 71 and the conduction portion 72 may be integrated with the front side case 21 or may be separate from each other.

In this configuration, the usage status of the ink (remaining amount of ink) in the ink tank 31 can be checked from the outside of the front side case 21 from a portion where the conduction portion 72 formed of a non-translucent or low-translucent and conductive material is not disposed.

The conduction portion 72 can also be formed of a material that is translucent and has conductivity, in addition to a non-translucent or low-translucent and conductive material.

In addition, the extension portion 51 of the peripheral electrode 5 and the ground electrode 6 may also be formed in the same manner as in Modification Example 6.

### [Modification Example 8]

In the above-described Embodiment 2, Modification Example 6, and Modification Example 7, the conduction portion 72 formed in a peripheral surface shape, a linear shape, or a band shape is used, but a layer containing a conductive filler (a metal filler, a carbon filler, or the like), a conductive fiber (a metal fiber, a carbon fiber, or the like), conductive particles (metal particles, carbon particles, or the like), or the like can be formed on the inner surface of the front side case 21 to form the conduction portion 72.

As the conductive filler, the conductive fiber, the conductive particles, and the like, a translucent material is preferable, but even in a case where a non-translucent or low-translucent material is used, a conduction portion 72 having predetermined translucency can be formed by adjusting the content, the size, and the like.

In this configuration, the usage status of the ink (the remaining amount of the ink) in the ink tank 31 can be checked from the outside of the front side case 21 via the conduction portion 72 having translucency.

The extension portion 51 of the peripheral electrode 5 and the ground electrode 6 may also be formed in the same manner as in Modification Example 6.

### [Modification Example 9]

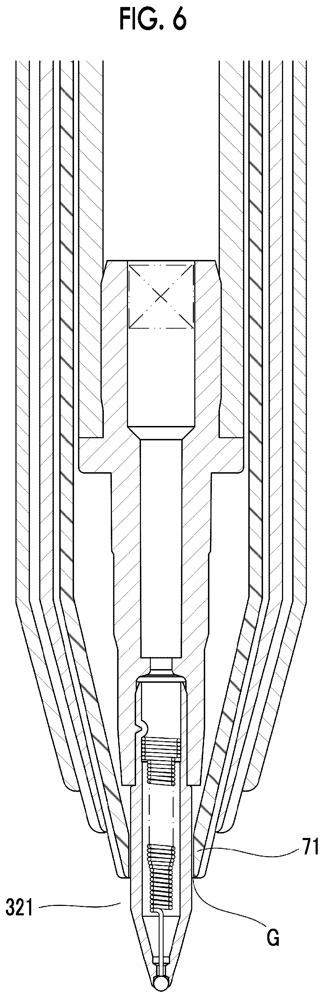

Fig. 6 is a longitudinal cross-sectional view of the active stylus pen 1 of Modification Example 9 of Embodiment 2 according to the present invention from a tip side.

In the above-described Embodiment 2, Modification Example 6, Modification Example 7, and Modification Example 8, the chuck 71 of the signal transmitting member 7 is formed in an annular shape to always be in contact with the periphery of the chip body 321, but as shown in Fig. 6, a gap G may be provided between the chip body 321 and the chuck 71 by making the inner diameter of the chuck 71 slightly larger than the outer shape of the chip body 321.

In a case where the active stylus pen 1 is actually used, the active stylus pen 1 is often used in a state of being slightly inclined instead of being used in a state of being erected (being erected to be orthogonal) with respect to the surface of the touch panel. In that case, in a case where the active stylus pen 1 is used, the tip portion of the refill 3 is bent and comes into contact with the chuck 71, so that a signal can be transmitted to the chip body 321 and the ball 322.

In addition, even in a case where the tip portion of the refill 3 does not come into contact with the chuck 71 during the use of the active stylus pen 1, the distance between the outer surface of the chip body 321 and the inner surface of the chuck 71 is extremely small, and thus, a signal can be transmitted from the chuck 71 to the chip body 321 by electrostatic coupling (electrostatic induction).

In consideration of the case where the transmission is performed by electrostatic coupling through the gap, it is preferable that the surface of the chip body 321 facing the chuck 71 is widened.

### [Embodiment 3]

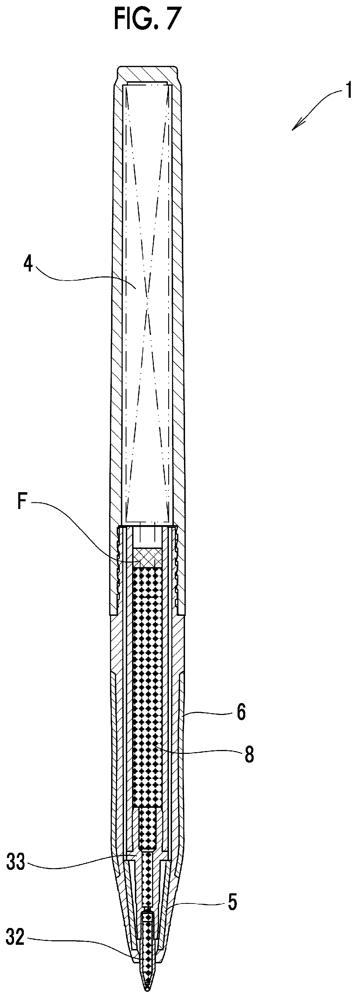

Fig. 7 is a longitudinal cross-sectional view of the active stylus pen 1 in Embodiment 3 of the present invention.

A basic structure of the active stylus pen 1, such as the tubular case 2, the refill 3 of the ballpoint pen stored in the tubular case 2, the electric circuit portion 4, the peripheral electrode 5, and the ground electrode 6, is the same as that of Embodiment 1.

In Embodiment 3, unlike Embodiment 1 and Embodiment 2, the electric signal generated by the electric circuit portion 4 is transmitted to the ball 322 via the ink 8 and the grease F in the ink tank 31.

The ink tank 31 is filled with the ink 8 and the grease F in the rear end portion of the ink 8, and in a case where the ink is consumed by writing with a ballpoint pen, the ink 8 in the ink tank 31 is reduced, and the rear end portion of the ink 8 moves toward the chip 32. In this case, the grease F filled in the rear end portion of the ink also moves toward the chip 32 together with the rear end portion of the ink 8, but in this case, the grease F gradually remains on the inner wall of the ink tank 31, and the grease F is continuously attached to the inner surface of the ink tank 31 between the rear end portion and the rear end portion of the ink 8.

The electric signal generated by the electric circuit portion 4 is transmitted to the ball 322 via the ink 8 and the grease F attached to the inner surface of the ink tank 31.

Since the ink 8 and the grease F are usually formed of a material having no conductivity, the ink 8 and the grease F are made to contain a conductive filler (a metal filler, a carbon filler, or the like), a conductive fiber (a metal fiber, a carbon fiber, or the like), conductive particles (metal particles, carbon particles, or the like), or the like to impart conductivity to the ink 8 and the grease F.

### [Embodiment 4]

In Embodiments 1 and 2 and the respective modification examples thereof, and Embodiment 3, the refill 3 is a ballpoint pen fixed to the tubular case 2, but in Embodiment 4, the refill 3 is a ballpoint pen that is made to be able to appear and disappear from a tip of the tubular case 2. As a mechanism for causing the refill 3 to appear and disappear, a known knocking mechanism or a mechanism in which the front side case 21 and the rear side case 22 are relatively rotated can be employed.

In a ballpoint pen having a mechanism that causes the refill 3 to appear and disappear, a spring is disposed around the chip body part, and this spring can also be used as the chuck 71 of the signal transmitting member 7.

In addition, the active stylus pen can also be configured to be turned ON/OFF by an operation of a knock button, which is an operation member for making the refill 3 appear and disappear, or by a relative rotation between the front side case 21 and the rear side case 22.

### [Embodiment 5]

In Embodiments 1 and 2 and the respective modification examples thereof, Embodiment 3, and Embodiment 4, a ballpoint pen is used as the writing utensil, but a mechanical pencil is used as the writing utensil in Embodiment 5.

The guide pipe that guides and fixes the core provided at the tip portion of the mechanical pencil is formed of a conductive material, similarly to the chip body 321 and the ball 322 of the refill 3, and generates an electric field between the guide pipe and the peripheral electrode 5. The guide pipe is formed of a metal which is a conductive member, for example, stainless steel or aluminum. Since the black core of the mechanical pencil contains graphite and has conductivity, an electric field can be generated as in the guide pipe.

In addition, a pencil lead tank of a mechanical pencil can be used instead of the ink tank 31.

Even in a case of a mechanical pencil, in a case of writing target where a surface of a written object such as a paper or the like is equal to or coarser than a predetermined roughness, writing can be performed with a core, but in a case of a smooth surface such as a touch panel using an active stylus pen, the core tip slips and writing cannot be performed, so that the touch panel surface is not stained with the core. However, depending on the combination of the core of the mechanical pencil and the touch panel, the core may adhere, and caution is required in use. However, in a case where the core is stored in the guide pipe in a case of being used as an active stylus pen, the core does not adhere to the touch panel.

### [Embodiment 6]

In Embodiments 1 and 2 and the respective modification examples thereof, Embodiment 3, Embodiment 4, and Embodiment 5, only one ballpoint pen or mechanical pencil is used as the writing utensil, but in Embodiment 6, a multicolor pen or a multifunctional writing utensil that can be selectively used as one writing utensil from among two or more ballpoint pens or mechanical pencils is used as the active stylus pen.

In this case, it is also possible to configure only one of the plurality of writing utensils to be used as the active stylus pen, to configure a plurality of writing utensils to be used as the active stylus pen, or to configure all of the writing utensils to be used as the active stylus pen.

In addition, in the active stylus pen using a multicolor pen or a multifunctional writing utensil, a ballpoint pen or a knock button of a mechanical pencil used as the active stylus pen can be used as a switch for turning the active stylus pen ON/OFF.

### [Modification Example 10]

In Embodiments 1 and 2 and the modification examples thereof, Embodiment 3, Embodiment 4, Embodiment 5, and Embodiment 6, the following known functions can be added.
(1) Writing Pressure Detection Function
(2) Inclination Detection Function of Active Stylus Pen
(3) Microvibration Generation Function for Improving Writing Touch
(4) Wireless Power Supply Function
(5) Magnet for Fixing to Tablet PC or Like
(6) Palm Rejection Function

In the above description, the active stylus pen 1 of Embodiments 1 and 2 according to the present invention and the modification examples thereof, and Embodiments 3, 4, 5, and 6, and Modification Example 10 have been described in detail with reference to the drawings. However, the specific configuration is not limited to the embodiments, and design changes and the like within a range not departing from the gist of the present invention are also included in the present invention.

In addition, the respective embodiments described above can be combined with each other by using the technology of each other unless there is a particular contradiction or problem in the purpose, the configuration, and the like.

### [Embodiments 7 to 13]

**In** the above-described Embodiments 1 and 2 and the modification examples thereof, Embodiment 3, Embodiment 4, Embodiment 5, Embodiment 6, and Modification Example 10, it has been described that a ballpoint pen or a mechanical pencil can be used as the active stylus pen.

Further improvements of the active stylus pen using the ballpoint pen and the mechanical pencil will be described as Embodiments 7 to 13.

The features of Embodiments 7 to 13 are not limited to the active stylus pen, and can be employed in a pen-type input device in general, such as input means to a two-dimensional input device such as a touch panel or a pen tablet equipped in a notebook PC, a tablet PC, a smartphone, or the like, and a three-dimensional input device for inputting a position in a space.

In the related art, in addition to communication between a pen tip and a touch panel, there is a stylus pen that can change a thickness or shade of a line by further communicating with an electronic device to be used and transmitting an inclination or a writing pressure of the pen detected by the pen to the electronic device, or can prevent erroneous recognition of contact other than the pen tip by a palm rejection function. The communication between the pen-type input device and the electronic device is performed in a wired or wireless manner, and for example, Bluetooth (registered trademark) is used as a wireless method.

There are a plurality of types of stylus pens that are used for communication with a touch panel, a pen tablet, or an electronic device and have different communication standards. For example, in the capacitive type, communication standards such as AES, MPP, and USI are known.

Therefore, a technique has been proposed in which one of a plurality of different communication standards can be selected and used (see PTL 2). **In** this stylus pen, as means for selecting one of a plurality of different standards, a push button switch is provided on a side surface of the stylus pen, and the standard is sequentially changed each time the push button switch is pressed (particularly, see [0187] of PTL 2).

In addition, a push button switch is provided on a side surface of the stylus pen for means for selecting one of a plurality of functions of a stylus pen such as a pen input, an eraser, a thin line, a thick line, a broken line, a wavy line, a straight line, presence or absence of a writing pressure function, a color change, a change in the type of the writing utensil, a whiteboard function, a range selection, a drag function, and a shortcut function, and the function is sequentially changed each time the push button switch is pressed. (Particularly, refer to [0021] of PTL 3)

As described above, the pen-type input device in which one of a plurality of different communication standards can be selected and used includes a push button switch in which means for selecting one standard is provided on a side surface of the pen-type input device. In this structure, the standard is sequentially changed each time the switch is pressed once. However, there is no means for displaying which standard is currently selected, and it is necessary to actually use the touch panel, the pen tablet, or the like to check whether or not the standard is suitable, and thus it is inconvenient to select the standard.

Similarly, for the pen-type input device that enables selection and use of one of the plurality of different functions, the selection of the function was inconvenient.

Therefore, as Embodiments 7 to 13, a pen-type input device is provided in which, in a case where one is selected from a plurality of different communication standards or a plurality of different functions, it is easy to understand which communication standard or which function is used.

### [Embodiment 7]

Hereinafter, a pen-type input device 1' of Embodiment 7 according to the present invention will be described with reference to the drawings.

In the following description, the same reference numerals in different figures denote the parts having the same functions, and the duplicated description thereof will be omitted as appropriate.

### [Overall Structure]

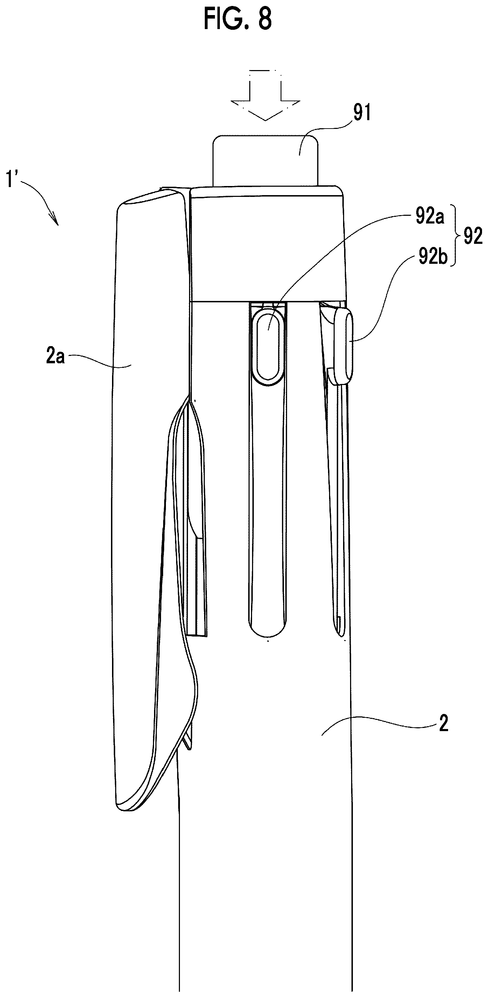

Fig. 8 is a side view of a main part of the pen-type input device 1' of Embodiment 1 of the present invention and shows a rear side of the pen-type input device 1'.

The pen-type input device 1' of Embodiment 7 is an active stylus pen of a capacitive type. A pen-type input device 1' includes a tubular case 2, an electric circuit portion that is stored in the tubular case 2, and a core body that is formed of a conductive material, and an electric field is generated in the vicinity of a tip portion of the core body by an electric signal transmitted from the electric circuit portion to the core body. The active stylus pen may be of an electromagnetic induction type in addition to the capacitive type.

In addition, as the structures for outputting the electric signals, such as the front side of the tubular case 2, the electric circuit portion, and the core body, the structures of the above-described Embodiments 1 and 2 and the modification examples thereof, Embodiment 3, Embodiment 4, Embodiment 5, Embodiment 6, and Modification Example 10 can be adopted.

The touch panel detects the electric field generated in the vicinity of the tip portion of the core body, and thus the electric field can be input to an electronic device such as a notebook PC, a tablet PC, or a smartphone including the touch panel.

The core body or the periphery thereof and the electric circuit portion are provided with means that detects a writing pressure applied to the core body, means that detects an inclination of the core body and the pen-type input device 1', means that communicates with the electronic device, a battery, and the like, and thus the thickness, density, and the like of a line to be input can be finely adjusted, and a palm rejection function can be enabled.

For the communication between the pen-type input device 1' and the touch panel and the communication between the pen-type input device 1' and the electronic device, communication standards different for each touch panel or device are used, and it is necessary to select a communication standard corresponding to the touch panel or electronic device to be used.

### [Operation Means]

The electric circuit portion of the pen-type input device 1' of Embodiment 7 can correspond to three communication standards.

A main switch 91 that switches on/off the power of the pen-type input device 1' is provided at a rear end portion of the tubular case 2.

As the main switch 91, a knock button used for a knock type ballpoint pen or the like may be employed, and in a case where the main switch 91 is pressed and immersed, the pen-type input device 1' is turned on. Then, in a case where the main switch 91 is pressed again to protrude, the pen-type input device 1' is turned off.

In addition, a slide switch 92 consisting of three slide switches 92a to 92c (only two slide switches 92a and 92b are shown in Fig. 8) is provided on a peripheral surface in the vicinity of the clip 2a on the rear end portion side of the tubular case 2.

The three slide switches 92a to 92c are respectively colored differently, and one communication standard corresponds to each color. Accordingly, it is easy to know which communication standard is selected. In addition, in a case where a symbol, a character, or the like indicating which communication standard is used is described in the vicinity of each of the slide switches 92a to 92c, it is easier to know which communication standard is selected.

The slide switch 92 may employ a mechanism used in a known multicolor pen or a multifunctional writing utensil.

The main switch 91 may be used as means for returning one of the slide switches 92 that is selected and slid to the original position. That is, a configuration may be adopted in which the pen-type input device 1' is turned off and one of the slide switches 92 selected so far returns to the original position on the rear end side from its fixed position on the tip side of the pen-type input device 1' by pressing the main switch 91 that has been pressed and immersed again to protrude the main switch 91.

Further, the clip 2a may be changed to a binder clip, and a binder operation of the binder clip may be performed, that is, the binder clip may be opened or the binder clip may be pressed to make the main switch 91 that has been pressed and immersed protrude. With this configuration, in a case where the binder clip is opened in order to store the pen-type input device 1' in a pocket or the like after use and the binder clip is closed after being inserted into the pocket, the main switch 91 returns to the protruding state. Therefore, it is possible to prevent forgetting to turn off the power of the pen-type input device 1'.

In addition, in the pen-type input device 1' in which the core body is made to be able to appear and disappear from the opening part at the tip of the tubular case 2, the core body may be configured to be drawn out from the opening part in a case where the main switch 91 is pressed and immersed, and the core body may be configured to be stored in the opening part in a case where the main switch 91 is pressed again and is protruded.

It should be noted that, as the communication standard to be selected, in addition to the communication standards between the pen-type input device 1' and the touch panel and between the pen-type input device 1' and the electronic device, a function of generating an electric field detected by the touch panel on the pen tip of the pen-type input device 1' and not performing communication between the pen-type input device 1' and the touch panel and between the pen-type input device 1' and the electronic device (hereinafter, referred to as a "non-communication standard") is also included as one of the communication standards to be selected, although strictly speaking, it is not a communication standard.

### [Use Method]

At the start of use, the pen-type input device 1' is turned on by pressing the main switch 91 to immerse the main switch 91.

Then, in a case where the slide switch 92 corresponding to the communication standard of the electronic device to be used, for example, the slide switch 92a, is slid in the tip direction of the pen-type input device 1', the corresponding communication standard is selected. The slid slide switch 92a is fixed at a position on the tip side of the pen-type input device 1'.

In a case where a slide switch other than the slide switch 92a selected so far, for example, the slide switch 92b is slid halfway in the tip direction of the pen-type input device 1' at the end of use, the slide switch 92a returns to the original position on the rear end side from the state of being fixed at the position on the tip side. Then, in a case where the slide switch 92b is released, the slide switch 92b also returns to the original position on the rear end side. Then, the pen-type input device 1' is turned off by pressing the main switch 91 again to protrude the main switch 91 that has been immersed.

The order of the operations of the main switch 91 and the slide switch 92 at the start of use and the end of use may be reversed.

In a case where the communication standard is changed during use (in a state where power is turned on), in a case where the slide switch 92 corresponding to the communication standard, for example, the slide switch 92b is slid in the tip direction of the pen-type input device 1', the corresponding communication standard is selected. The slid slide switch 92b is fixed at the position on the tip side, and the slide switch 92a selected so far returns to the original position on the rear end side from the state of being fixed at the position on the tip side.

It is not a problem that the ON/OFF of the main switch 91 is switched while one of the slide switches 92a to 92c is fixed at the position on the tip side.

In addition, the number of communication standards is not limited to three, and any number of two or more communication standards can be set. In principle, the number of slide switches 92 to be required is the same as the number of selectable communication standards.

### [Modification Example 11]

In the pen-type input device 1' of Embodiment 7, the main switch 91 is simply switched ON/OFF, but in Modification Example 11, in a case where the main switch 91 is pressed and immersed, the main switch 91 is switched ON and a non-communication standard is selected, and thereafter, one of the slide switches 92 is slid to be able to select another communication standard.

In a case where the main switch 91 is pressed and immersed, the selected standard is not limited to the non-communication standard, and may be another communication standard.

### [Modification Example 12]

In the pen-type input device 1' of Embodiment 7, the ON/OFF is switched by the main switch 91, but in Modification Example 12, the main switch 91 is omitted, and the slide switches 92a to 92c are used. That is, the slide switches 92a to 92c are configured to be turned OFF at a position on the rear end side and to be turned ON at a position on the tip side. In a case where one of the slide switches 92a to 92c is positioned on the tip side, the pen-type input device 1' is turned on.

In a case where the slide switch 92 corresponding to the communication standard of the electronic device to be used is slid in the tip direction of the pen-type input device 1' and fixed at a position on the tip side at the start of use, the corresponding communication standard is selected and the pen-type input device 1' is turned on.

At the end of use, in a case where the slide switch 92 other than the slide switch 92 selected so far is slid halfway in the tip direction of the pen-type input device 1', the slide switch 92 selected so far is returned to the original position on the rear end side, and the slide switch 92 slid halfway is released and returned to the original position on the rear end side, the pen-type input device 1' is turned off.

In addition, in a case where the electronic device is changed to the electronic device having a different communication standard during use, the corresponding communication standard is selected in a case where the slide switch 92 corresponding to the communication standard, for example, the slide switch 92b is slid in the tip direction of the pen-type input device 1'. The slid slide switch 92b is fixed at a position on the tip side, and the slide switch 92a selected so far returns to the original position on the rear end side from a state where the slide switch 92a is fixed at a position on the tip side while maintaining the ON state.

### [Modification Example 13]

In the above-described Embodiment 7 and Modification examples 11 and 12, the slide switch 92 is used to select the communication standard of the pen-type input device 1', but may be used to select the function of the pen-type input device 1'.

Examples of the selected function include a pen input, an eraser, a thin line, a thick line, a broken line, a wavy line, a straight line, the presence or absence of a writing pressure function, a color change, a change in the type of writing utensil, a whiteboard function, a range selection, a drag function, and a shortcut function. In addition, it may be configured for the individual user to be able to customize the plurality of functions by assigning any one of the plurality of functions to one slide switch 92.

### [Embodiment 8]

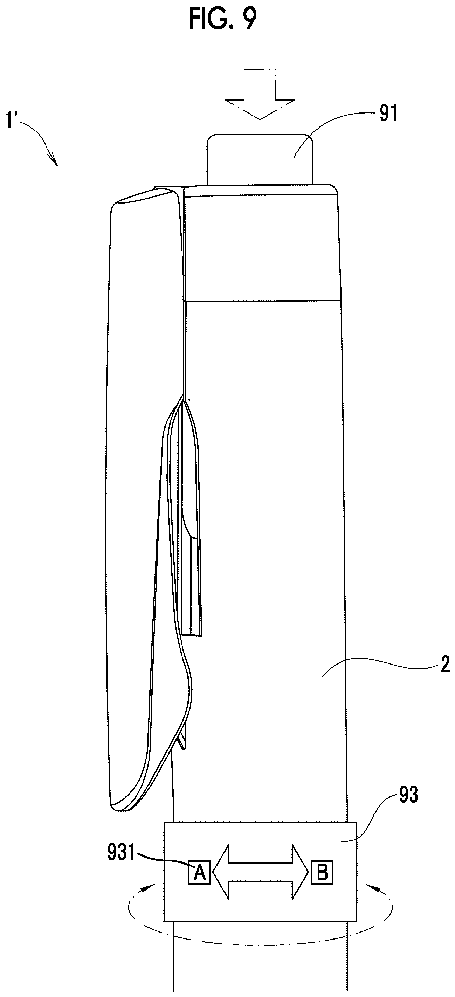

Fig. 9 is a side view of a main part of a pen-type input device 1' of Embodiment 8 of the present invention, and shows a rear side of the pen-type input device 1'.

Similar to the pen-type input device 1' of Embodiment 7, the pen-type input device 1' has a tubular case 2, an electric circuit portion that is stored in the tubular case 2, and a core body (none of which are shown) formed of a conductive material, and is configured such that an electric field is generated in the vicinity of a tip portion of the core body by an electric signal transmitted from the electric circuit portion to the core body.

### [Operation Means]

The electric circuit portion of the pen-type input device 1' of Embodiment 8 can correspond to two communication standards.

A main switch 91 that switches on/off the power of the pen-type input device 1' is provided at a rear end portion of the tubular case 2. As in Embodiment 7, the main switch 91 may employ a knock button, and further, the main switch 91 that has been pressed and immersed may be configured to protrude by opening the binder clip, pressing the binder clip, or performing a binder operation of the binder clip using the clip 2a as a binder clip.

**In** addition, in the pen-type input device 1' in which the core body is made to be able to appear and disappear from the opening part at the tip of the tubular case 2, the core body may be configured to be drawn out from the opening part in a case where the main switch 91 is pressed and immersed, and the core body may be configured to be stored in the opening part in a case where the main switch 91 is pressed again and is protruded.

A rotary switch 93 that rotates in the circumferential direction is provided along a peripheral surface in the vicinity of a center portion of the tubular case 2.

The rotary switch 93 can rotate between two positions A and B at both ends in the rotation direction. The rotary switch 93 is provided with a window portion 931, and the tubular case 2 is colored such that different colors can be seen from the window portion at two positions. Accordingly, it is easy to know which communication standard is selected. Fig. 2 shows that the window portion 931 can be stopped at two positions indicated by A and B, and at the positions A and B, different colors, characters, symbols, and the like can be seen from the window portion 931. The window portion 931 is not simultaneously positioned at two positions of A and B.

In addition, in a case where an instruction portion formed of printing, a projection, or the like is formed at one position of the rotary switch in the circumferential direction, and a symbol, a character, or the like indicating which communication standard is used is described in the portion where the instruction portion points out at two positions at both ends in the rotation direction, it is easier to know which communication standard is selected.

The rotary switch 93 may divide the tubular case 2 into a front side case and a rear side case and relatively rotate the front side case and the rear side case.

In addition, in a case where the click feeling is provided at two positions during rotation, the stop position of the rotary switch 93 is easily understood.

In addition, the rotary switch 93 may be able to rotate between two positions, may be able to rotate 360°, that is, may be able to rotate without limitation in terms of both the rotation direction and the rotation amount, and may select the communication standard at two positions.

### [Use Method]

In a case where the use of the pen-type input device 1' is started, the main switch 91 is pressed and immersed to turn on the pen-type input device 1'.

Then, in a case where the rotary switch 93 is rotated to a position corresponding to a communication standard of the electronic device to be used as necessary, the corresponding communication standard is selected. In a case where the initial position of the rotary switch 93 is a position corresponding to the communication standard of the electronic device to be used, it is not necessary to rotate the rotary switch 93.

At the end of use, the pen-type input device 1' is turned off by pressing the immersed main switch 91 again to protrude.

The order of the operations of the main switch 91 and the rotary switch 93 at the start of use may be reversed.

In addition, in a case where the communication standard is changed during use (in a state where the power is turned on), the rotary switch 93 is rotated to a position corresponding to the communication standard.

There is no problem even in a case where the main switch 91 is switched ON/OFF while the rotary switch 93 is fixed at any position.

In addition, the number of communication standards is not limited to two, and any number of three or more communication standards can be set. In principle, the number of fixed positions of the rotary switch 93 is required to be the same as the number of communication standards.

### [Modification Example 14]

In the pen-type input device 1' of Embodiment 8, the main switch 91 is configured to switch ON/OFF, but the main switch 91 can also be omitted. That is, the rotary switch 93 is configured to be rotatable between three positions including two positions where the communication standards are selected and a position where the communication standard is OFF. In a case where the rotary switch 93 is at a position where any communication standard is selected, the pen-type input device 1' is turned on.

The rotary switch 93 is switched to an ON state in a case where the rotary switch 93 is rotated to positions corresponding to the two communication standards from an OFF position, and conversely, the rotary switch 93 is switched to an OFF state in a case where the rotary switch 93 is rotated to the OFF position from the positions corresponding to the two communication standards.

The three positions of the rotary switch 93 can be arranged in the order of OFF-communication standard A-communication standard B or in the order of communication standard A-OFF-communication standard B.

In the present Modification Example 4, the rotary switch 93 can be rotated between three positions, but may also be rotated 360°, that is, can be rotated without limitation in both the rotation direction and the rotation amount, and may select the OFF or the communication standard at the three positions.

In addition, the number of communication standards is not limited to two, and any number of three or more communication standards can be set.

In a case where the rotary switch 93 is rotated to a position corresponding to the communication standard of the electronic device to be used from the OFF position at the start of use, the corresponding communication standard is selected, and the pen-type input device 1' is turned ON.

In a case where the rotary switch 93 is rotated to the OFF position from a position corresponding to the communication standard of the electronic device being used at the end of use, the pen-type input device 1' is turned off.

### [Modification Example 15]

In Embodiment 8 and Modification Example 14, the rotary switch 93 is for selecting the communication standard of the pen-type input device 1', but may be for selecting the function of the pen-type input device 1'.

Examples of the selected function include a pen input, an eraser, a thin line, a thick line, a broken line, a wavy line, a straight line, the presence or absence of a writing pressure function, a color change, a change in the type of writing utensil, a whiteboard function, a range selection, a drag function, and a shortcut function. In addition, the user may be configured to be able to customize each user by assigning any one of the plurality of functions to one position of the rotary switch 93.

### [Embodiment 9]

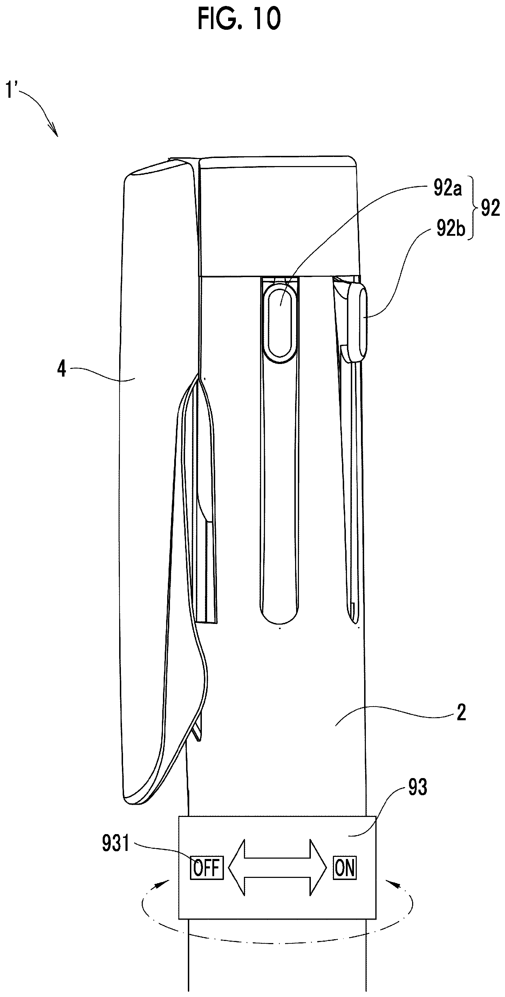

Fig. 10 is a side view of a main part of a pen-type input device 1' of Embodiment 9 of the present invention and shows a rear side of the pen-type input device 1'.

Similar to the pen-type input device 1' of Embodiment 7, the pen-type input device 1' has a tubular case 2, an electric circuit portion that is stored in the tubular case 2, and a core body (none of which are shown) formed of a conductive material, and is configured such that an electric field is generated in the vicinity of a tip portion of the core body by an electric signal transmitted from the electric circuit portion to the core body.

### [Operation Means]

Similar to the pen-type input device 1' of Embodiment 7, three slide switches 92a to 92c (in Fig. 10, only two slide switches 92a and 92b are shown) are provided on the peripheral surface in the vicinity of the clip on the rear end portion side of the tubular case 2.

In addition, the same rotary switch 93 as in Embodiment 8 is provided.

In Embodiment 9, the slide switch 92 is used as a switch for selecting one of the three communication standards, and the rotary switch 93 is used as a switch for switching ON/OFF.

Further, the clip 2a may be configured to return the rotary switch 93 from the ON position to the OFF position, as a binder clip, by opening the binder clip, pressing the binder clip, or performing a binder operation of the binder clip.

In addition, in the pen-type input device 1' in which the core body is made to be able to appear and disappear from the opening part at the tip of the tubular case 2, the core body may be configured to be drawn out from the opening part in a case where the rotary switch 93 is rotated from the OFF position to the ON position, and the core body may be stored in the opening part in a case where the rotary switch 93 is rotated from the ON position to the OFF position.

### [Use Method]

At the start of use, the pen-type input device 1' is turned on by rotating the rotary switch 93 from the OFF position to the ON position.

Then, in a case where the slide switch 92 corresponding to the communication standard of the electronic device to be used, for example, the slide switch 92a, is slid in the tip direction of the pen-type input device 1', the corresponding communication standard is selected. The slid slide switch 92a is fixed at a position on the tip side.

At the end of use, in a case where a slide switch other than the slide switch 92a selected so far, for example, the slide switch 92b is slid halfway in the tip direction of the pen-type input device 1', the slide switch 92a returns to the original position on the rear end side from the state of being fixed at the position on the tip side, and then, in a case where the slide switch 92b is released, the slide switch 92b also returns to the original position on the rear end side. Then, the rotary switch 93 is rotated from the ON position to the OFF position to turn off the pen-type input device 1'.

The order of the operations of the rotary switch 93 and the slide switch 92 at the start of use and the end of use may be reversed.

In addition, in a case where the communication standard is changed during use (in a state where the power is turned on), in a case where the slide switch 92 corresponding to the communication standard, for example, the slide switch 92b is slid in the tip direction of the pen-type input device 1', the corresponding communication standard is selected. The slid slide switch 92b is fixed at the position on the tip side, and the slide switch 92a selected so far returns to the original position on the rear end side from the state of being fixed at the position on the tip side.

It is not a problem that the rotary switch 93 is switched to ON/OFF while one of the slide switches 92a to 92c is fixed at the position on the tip side.

In addition, the number of communication standards is not limited to three, and any number of two or more communication standards can be set. In principle, the number of slide switches 92 to be required is the same as the number of selectable communication standards.

### [Modification Example 16]

In the above-described Embodiment 9, the slide switch 92 is for selecting the communication standard of the pen-type input device 1', but may be for selecting the function of the pen-type input device 1'.

Examples of the selected function include a pen input, an eraser, a thin line, a thick line, a broken line, a wavy line, a straight line, the presence or absence of a writing pressure function, a color change, a change in the type of writing utensil, a whiteboard function, a range selection, a drag function, and a shortcut function. In addition, it may be configured for the individual user to be able to customize the plurality of functions by assigning any one of the plurality of functions to one slide switch 92.

### [Embodiment 10]

In Embodiment 7 and Modification Examples 11 to 13, Embodiment 8 and Modification Examples 14 and 15, and Embodiment 9 and Modification Example 16, only one of the communication standard or the function is selected, but both the communication standard and the function may be selected.

It is also possible to configure the communication standard to be selected by the slide switch 92 and the function to be selected by the rotary switch 93, or to configure the function to be selected by the slide switch 92 and the communication standard to be selected by the rotary switch 93.

For the ON/OFF of the pen-type input device 1', any one of the main switch 91, the slide switch 92, or the rotary switch 93 may be used.

### [Embodiment 11]

In Embodiment 7 and Modification Examples 11 to 13, Embodiment 8 and Modification Examples 14 and 15, Embodiment 9 and Modification Example 16, and Embodiment 10, as described above, a writing utensil such as a ballpoint pen or a mechanical pencil is used as the core body formed of a conductive material.

In a case where the refill of the ballpoint pen is used, as in the structures of Embodiments 1 and 2 and the modification examples thereof, Embodiments 3 and 4, and Modification Example 10, an electric signal is transmitted to a chip formed of a conductive material such as metal, and thus an electric field can be generated in the vicinity of the tip of the chip.

In addition, in a case where a mechanical pencil is used, as in the structure of Embodiment 5 and Modification Example 10 described above, an electric signal is transmitted to a guide pipe formed of a conductive material such as metal, which is provided at the tip, and an electric field can be generated in the vicinity of the tip of the chip.

As described above, in the pen-type input device 1' using the writing utensil, not only the pen-type input device 1' can be used as input means of the electronic device, but also the pen-type input device 1' can be used to write on a written object such as a paper. Therefore, the pen-type input device 1' can be used for both the touch panel and the written object, such as paper, without replacing the pen-type input device and the writing utensil, and thus the convenience is remarkably improved.

In Embodiment 7, Modification Example 11, and Embodiment 8, the main switch 91 may be configured to switch ON/OFF of the pen-type input device 1' and to make the refill of the ballpoint pen appear and disappear from the opening part at the tip of the tubular case 2.

In addition, in Modification Example 12, Modification Example 14, and Embodiment 9, a knock button may be further disposed at the rear end portion of the tubular case 2, and the knock button may be configured to operate only the appearance and disappearance of the refill of the ballpoint pen or the drawing out of the core of the mechanical pencil. With this configuration, it is possible to use a writing utensil such as a ballpoint pen or a mechanical pencil without turning on the power of the pen-type input device 1'.

### [Modification Example 17]

In the above-described Embodiment 11, the slide switch 92 or the rotary switch 93 is used to select the communication standard of the pen-type input device 1', but may be used to select the function of the pen-type input device 1'.

Examples of the selected function include a pen input, an eraser, a thin line, a thick line, a broken line, a wavy line, a straight line, the presence or absence of a writing pressure function, a color change, a change in the type of writing utensil, a whiteboard function, a range selection, a drag function, and a shortcut function. In addition, it may be configured for individual user to be able to make customization by assigning any one of the plurality of functions to one position of one slide switch 92 or one rotary switch 93.

### [Embodiment 12]

In Embodiment 11, one writing utensil is used as the pen-type input device 1', but as in Embodiment 6 described above, a multicolor pen or a multifunctional writing utensil that can be selectively used from two or more ballpoint pens or mechanical pencils can also be used as the pen-type input device 1'.

In such a pen-type input device 1', all of two or more writing utensils are shared as the pen-type input device 1'.

In a case where the pen-type input device 1' is a multicolor pen or a multifunctional writing utensil that can selectively use one of a ballpoint pen or a mechanical pencil by a slide switch, for example, as in Embodiment 7, in a case where a configuration is made in which one of three communication standards is selected by the slide switch 92, the slide switch 92 is means having both functions of selecting a writing utensil and selecting a communication standard.

As in Embodiment 7, the main switch 91 may be used as means for returning one of the slide switches 92 that is selected and slid to the original position. That is, a configuration may be adopted in which the pen-type input device 1' is turned off and one of the slide switches 92 selected so far returns to the original position on the rear end side from its fixed position on the tip side of the pen-type input device 1' by pressing the main switch 91 that has been pressed and immersed again to protrude the main switch 91.

Further, the main switch 91 that is pressed and immersed may be configured to protrude by using the clip 2a as a binder clip and opening the binder clip, pressing the binder clip, or performing a binder operation of the binder clip.

**In** addition, in a case where the pen-type input device 1' is used as a multicolor pen or a multifunctional writing utensil that can selectively use one of a ballpoint pen or a mechanical pencil by relatively rotating the front side case and the rear side case of the tubular case, for example, as in Embodiment 8, the rotary switch 93 is means having both functions of selecting the writing utensil and selecting the communication standard in a case where the rotary switch 93 is configured to select one of the two communication standards.

As the switch for turning the pen-type input device 1' on and off, the main switch 91 may be used as in Embodiments 7 and 8, the slide switch 92 may be used as in Modification Example 12, or the rotary switch 93 may be used as in Modification Example 13 and Embodiment 9.

### [Modification Example 18]

**In** the above-described Embodiment 12, the slide switch 92 or the rotary switch 93 is used to select the communication standard of the pen-type input device 1', but may be used to select the function of the pen-type input device 1'.

Examples of the selected function include a pen input, an eraser, a thin line, a thick line, a broken line, a wavy line, a straight line, the presence or absence of a writing pressure function, a color change, a change in the type of writing utensil, a whiteboard function, a range selection, a drag function, and a shortcut function. **In** addition, it may be configured for individual user to be able to make customization by assigning any one of the plurality of functions to one position of one slide switch 92 or one rotary switch 93.

### [Embodiment 13]

In Embodiment 7 and Modification Examples 11 to 13, Embodiment 8 and Modification Examples 14 and 15, Embodiment 9 and Modification Example 16, Embodiment 10, Embodiment 11 and Modification Example 17, and Embodiment 12 and Modification Example 18, the pen-type input device 1' is a capacitive stylus pen, but may be an electromagnetic induction stylus pen, or may be a three-dimensional input device that incorporates an acceleration sensor and inputs a position in a space, or a three-dimensional input device that inputs a position in a space using an optical sensor.

In the above description, the pen-type input device 1' according to Embodiment 7 and Modification Examples 11 to 13, Embodiment 8 and Modification Examples 14 and 15, Embodiment 9 and Modification Example 16, Embodiment 10, Embodiment 11 and Modification Example 17, Embodiment 12 and Modification Example 18, and Embodiment 13 of the present invention has been described in detail with reference to the drawings. However, the specific configuration is not limited to these embodiments, and the present invention includes a design change or the like without departing from the gist of the present invention.

In addition, the respective embodiments described above can be combined with each other by using the technology of each other unless there is a particular contradiction or problem in the purpose, the configuration, and the like.

### [Embodiment 14]

As described in the description of Embodiment 1, the active stylus pen 1 is configured such that writing can be performed by the ballpoint pen in a writing target where the surface of the written object, such as a paper or the like, is equal to or coarser than a predetermined roughness, but the ball slips and writing cannot be performed on a smooth surface such as a touch panel, and the active stylus pen 1 can be used either as a writing utensil for writing on a written object such as a paper or the like or as an input device of a touch panel equipped in an electronic device.

Hereinafter, a specific Embodiment 14 having the above-described features will be described with reference to the drawings.

In the related art, there is a writing utensil that is used for both an input device of a touch panel and a written object with a writing utensil, in which a panel contact portion is provided on a front end side of a single shaft tube to constitute a touch pen, and a writing chip is provided on a rear end side of the same shaft tube and an ink is immanent therein to constitute a ballpoint pen (see PTL 4).

According to the related art, in a case where the front and rear are reversed by replacing the shaft tube while the panel contact portion on the front end side is brought into contact with the touch panel to perform the input operation, writing on the paper surface is possible by the writing chip on the rear end side of the same shaft tube.

By the way, according to the above-described related art, in a case where the front and rear are mistaken and the writing chip is brought into contact with the touch panel display, there is a concern that the touch panel display may be stained with ink. The touch panel display may be covered with the writing quality improving sheet described in PTL 5, but in such a case, there is a concern that the writing quality improving sheet may be stained with the ink.

In addition, in a case where the ball rolls out of the paper surface due to excessive force while writing on the paper surface with the writing chip on the rear end side, there is a concern that the ink is transferred to the desk surface on the lower side of the paper surface.

Therefore, as Embodiment 14, an active stylus pen in which a chip of a ballpoint pen, which is a writing utensil, is used as a pen tip of an input device of a touch panel is provided, in which the touch panel is not stained with ink by the chip of the ballpoint pen.

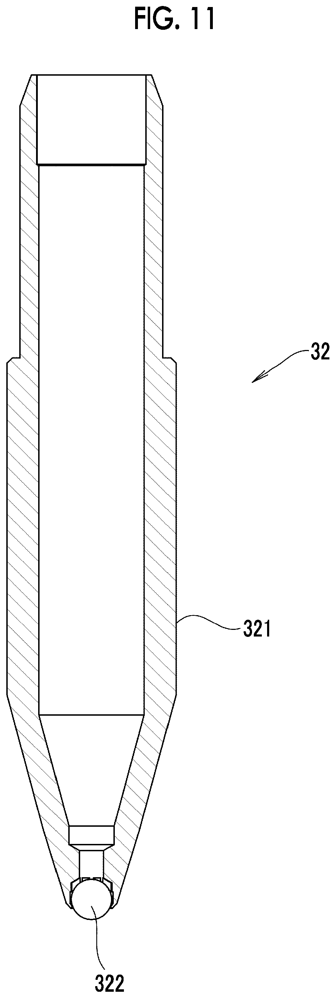

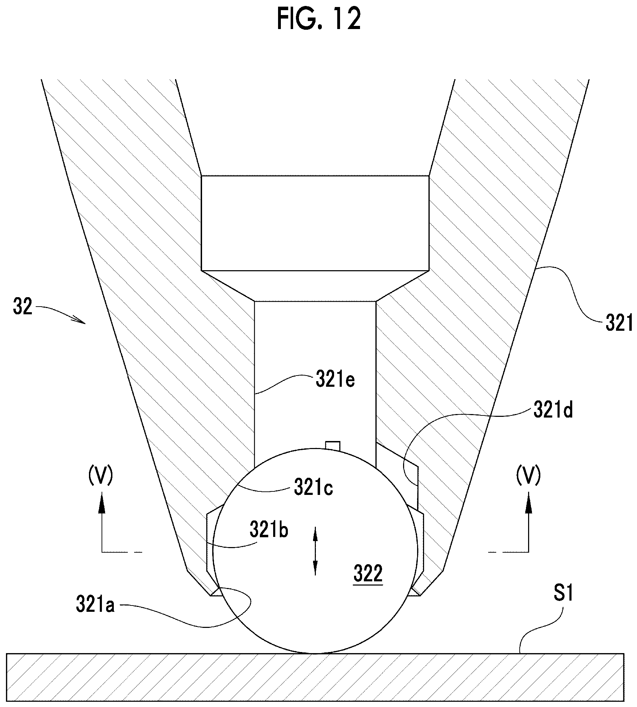

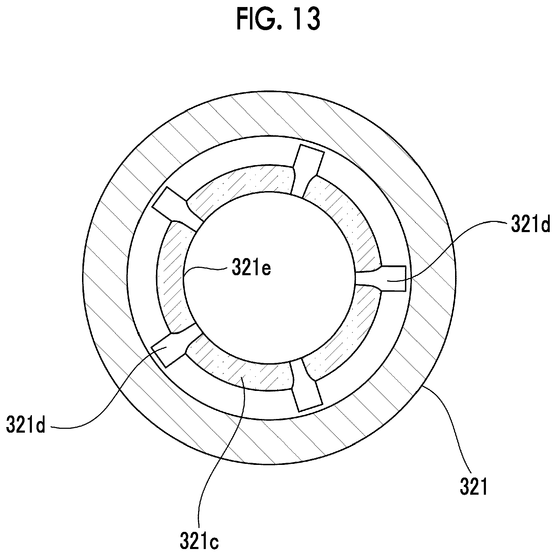

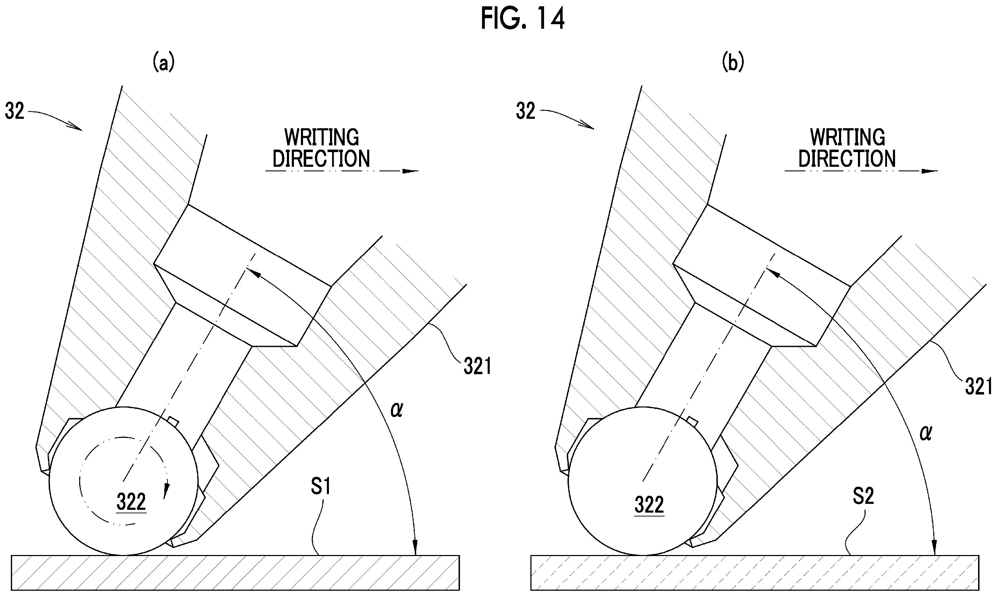

Figs. 11 to 14 show a chip 32 of Embodiment 14. More specifically, Fig. 11 is an all cross-sectional view showing the chip 32, Fig. 12 is a main part enlarged longitudinal cross-sectional view showing a state in which the chip 32 touches the written surface in a substantially perpendicular manner, Fig. 13 is a transverse sectional view taken along the line (V) - (V) in Fig. 12, and Fig. 14 is a main part longitudinal cross-sectional view of the chip 32. Fig. 14 at (a) is a view showing a state in which the ball rolls on the written surface, and Fig. 14 at (b) is a view showing a state in which the ball is slid on the written surface with a relatively low dynamic friction coefficient without rolling.

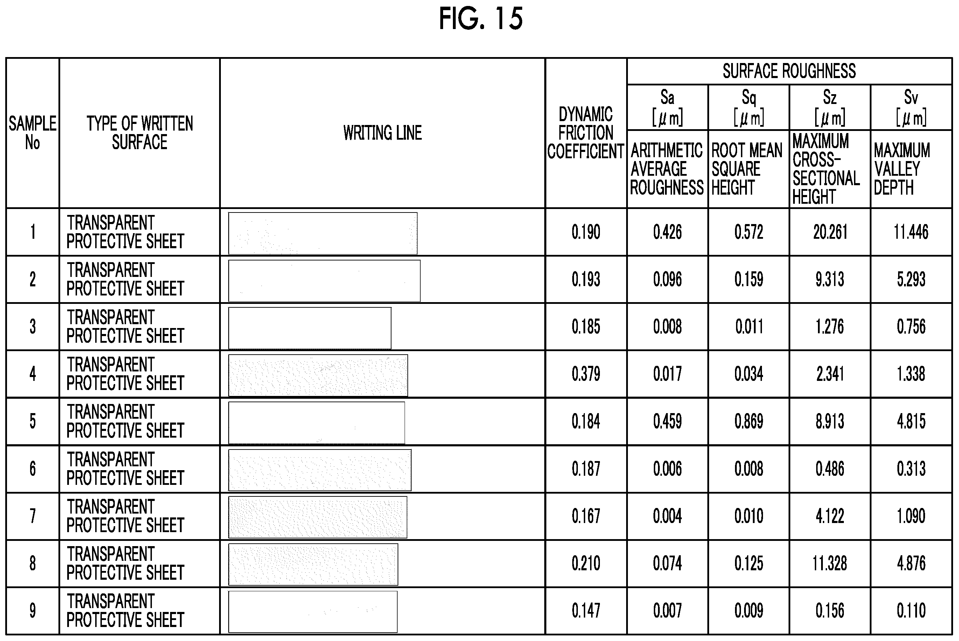

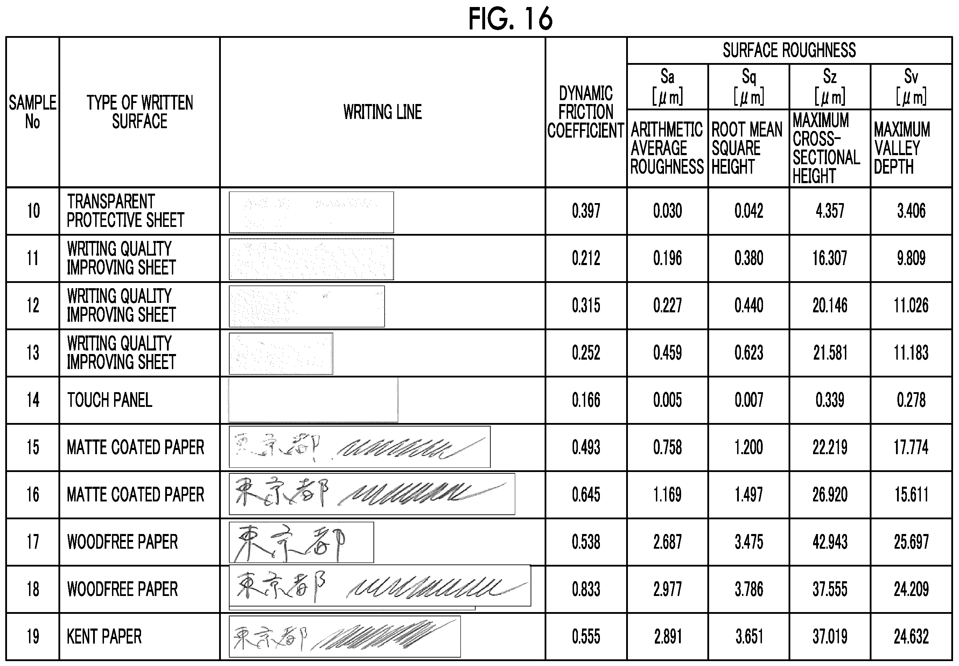

In addition, Figs. 15 and 16 are tables showing the results of the measurement experiment in Embodiment 14.

The active stylus pen 1 is the same as that described in Embodiment 1, and thus the detailed description thereof will be omitted. In addition, the structure of the chip 32 and the connecting member 33 shown in Fig. 5 is common to the structure of the chip 32 and the connecting member 33 of Embodiment 1. In Figs. 11 to 14, the spring 323 and the check valve 331 are omitted.

The chip 32 of Embodiment 14 is provided such that the ball 322 rolls on the first written surface S1 by appropriately adjusting the configuration of each part and does not roll on the second written surface S2 having physical properties different from the first written surface S1.

The first written surface S1 is a surface having a surface roughness larger than that of a second written surface S2 described later, and the first written surface S1 includes the surface of various general writing papers.

The second written surface S2 is a surface having a maximum valley depth Sv of less than 14 µm, a maximum cross-sectional height Sz of less than 22 µm, a root mean square height Sq of less than 1.0 µm, and an arithmetic average roughness Sa of less than 0.5 µm.

Here, Sv, Sz, Sq, and Sa are parameters of a surface roughness defined in ISO25178.

The second written surface S2 includes a surface of a general touch panel, a surface of a transparent protective sheet that is overlaid on the touch panel to protect the touch panel, a surface of a sheet for improving writing quality (for example, see PTL 5) that is overlaid on the touch panel or constitutes an outermost portion of the touch panel, and the like. The sheet for improving the writing quality is also referred to as a paper-like film or the like.

The material of the second written surface S2 is, for example, polyethylene terephthalate (PET), glass, or the like.

The threshold values of Sv, Sz, Sq, and Sa are set based on trial-and-error experiments by the inventors of the present application.

That is, the inventors of the present application performed a measurement experiment on the written surface of 19 types of samples (sheets or papers) having different manufacturers, specifications, and the like under the following conditions, acquired the surface roughness data shown in the table of Fig. 10 as a result, and set the threshold value based on the data.

### <Conditions>

Measurement device: VS1800 (white light interference) manufactured by Hitachi, Ltd.
Test piece: approximately 2 cm × 2 cm
Magnification: ×10
Measurement range: about 1.113 mm × 1.113 mm

**In** addition, the second written surface S2 has a smaller value of a dynamic friction coefficient than the first written surface S1, which is less than 0.45, according to the following measurement method.

In the method of measuring the dynamic friction coefficient, the dynamic friction coefficient is measured in a case where a writing operation is performed on a written surface of the 19 types of samples using an experimental chip that holds an experimental ball of a diameter of 0.7 mm in an unrotatable manner under conditions of a writing speed of 25 mm/s, a writing angle of 70 degrees, and a writing load of 200 g. Then, after the start of the measurement, an average value of the dynamic friction coefficients in 5 seconds of 0.3 seconds to 5.3 seconds is obtained. The measurement time does not need to be 5 seconds, and may be shorter or longer than 5 seconds as long as it is a time required to obtain a stable measurement value.

Here, specifically, the experimental chip is a chip 32 of the present embodiment in which a ball 322 (experimental ball) is fixed by an adhesive in an unrotatable manner. The writing angle is an angle between the written surface and an axis of the experimental chip. The writing load is a load applied substantially perpendicularly to the written surface.

The dynamic friction coefficient measured by the measurement method is as shown in the tables of Figs. 15 and 16.

The inventors of the present application set the threshold value for the dynamic friction coefficient of the second written surface S2 based on the measured value of the dynamic friction coefficient shown in this table.

The chip body 321 is a long, substantially cylindrical member of which a front end side is tapered.

On a front end side of an inner peripheral surface of the chip body 321, a ball house is constituted by including an inward facing tip edge 321a that is in contact with or close to an outer peripheral surface on a front half part side of the ball 322, a tubular inner surface 321b that is provided on a rear side of the inward facing tip edge 321a and that secures a gap through which the ink 8 is allowed to flow between the outer peripheral surface of the ball 322 and the tubular inner surface 321b, a substantially annular receive surface 321c that receives the ball 322 in a case of retraction on a rear side of the tubular inner surface 321b, a plurality of ink guide grooves 321d that are provided at intervals in a circumferential direction, and a cylindrical ink guide hole 321e that is positioned on a center line on a rear side of the ball 322. The ball 322 is rotatably held in the ball house.

The inward facing tip edge 321a is an annular portion formed by performing caulking on the front end side of the chip body 321 in the radially inner direction, and an inner peripheral surface thereof is inclined in the radially inner direction as going forward.

The receive surface 321c is an annular indentation formed by pressure-contacting the ball 322 with a conical frustum-shaped surface whose diameter gradually increases toward the front.

The ink guide groove 321d is formed such that a space in the ink guide hole 321e and a gap inside the tubular inner surface 321b communicate with each other, and a plurality of ink guide grooves 321d are provided at intervals in the circumferential direction of the receive surface 321c.

The ball 322 is formed in a spherical shape by a hard metal material.

An outer diameter of the ball 322 is set to an appropriate dimension according to a function required for the active stylus pen 1.

The chip 32 having the above-described configuration can be applied not only to a pen tip of a general ballpoint pen but also to a pen tip of various input pens such as a capacitive stylus pen without a power supply, a capacitive stylus pen with a power supply, an electromagnetic induction stylus pen, and a pressure-sensitive input pen.

For example, in a case where the active stylus pen 1 is configured as a capacitive stylus pen equipped with a power supply, the outer diameter of the chip 32 is set in a range of 0.1 to 2.0 mm.

In addition, in a case where the active stylus pen 1 is configured as a capacitive stylus pen without a power supply, it is necessary to secure a large contact area with a written surface such as a touch panel, and thus the outer diameter of the chip 32 is set to 1.5 mm or more.

In particular, in a preferred example of the present embodiment, the outer diameter of the ball 322 is set to 0.3 to 0.7 mm, and the surface roughness of the outer peripheral surface of the ball 322 is set to Ra 3 nm (0.003 µm) or more.

In addition, the ball 322 is held on the front end side of the chip body 321 to move within a range of 0.025 mm or less, and particularly preferably 0.015 mm, in the axial direction of the chip body 321 between the inward facing tip edge 321a and the receive surface 321c of the chip body 321.

Depending on the movement range in the axial direction, the ink 8 can be prevented from flowing out even in a case where a gap is generated between the ball 322 and the inward facing tip edge 321a by pressing the ball 322 against the written surface without rolling the ball 322.

In addition, the total area (a portion of the two-dot chain line in Fig. 5) of the receive surface 321c that receives the ball 322 on the rear side in the inner part of the chip body 321 in contact with the ball 322 is 0.2 mm² or less, and particularly preferably 0.12 mm².

In addition, the connecting member 33 is a substantially stepped tubular member having a diameter reduced in a front half part thereof with respect to a rear half part thereof, and a front end side thereof is annularly fitted to a rear end side of the chip 32, and a rear end side thereof is press-fitted to a front end side of the ink tank 31.

In addition, as another example other than the example shown in the drawing, the connecting member 33 may be omitted, and the chip 32 may be directly connected to the ink tank 31.

The ink tank 31 is formed in a long cylindrical shape from a synthetic resin, a metal material, or the like, and is provided across the front side case 21 and the rear side case 22 according to the example of Fig. 1.

The ink 8 fills a range from the inside of the chip 32 to the ink tank 31. A grease F that prevents the ink 8 from flowing out is provided on a rear side of the ink 8.

As the ink 8, a general oil-based ink, a water-based ink, a shear thinning ink, or the like can be used.

The kind and viscosity of the ink 8 are appropriately set so that the operation and effect unique to the active stylus pen 1 described below are effectively exhibited.

Next, a characteristic operation and effect of the active stylus pen 1 having the above-described configuration will be described in detail.

In general, in a case where the writer grips the ballpoint pen and performs a normal writing operation, an angle α (hereinafter, referred to as a writing angle) between an axis of the ballpoint pen and a written surface is in a range of 45 degrees to 90 degrees. In addition, a load (hereinafter, referred to as a writing load) with which the ballpoint pen is pressed against the written surface is in a range of 10 to 400 g.

In a case where the writer grips the active stylus pen 1 and performs writing on the first written surface S1 at the writing angle α and the writing load, the ball 322 rolls on the first written surface S1, the ink 8 in the chip body 321 adheres to the outer peripheral surface of the ball 322 and moves outside the chip body 321, and the ink 8 is transferred from the outer peripheral surface of the ball 322 to the first written surface S1.

In addition, in a case where the writer grips the active stylus pen 1 and performs writing on the second written surface S2 having a relatively small dynamic friction coefficient with the writing angle and the writing load, the ball 322 does not slide and roll on the second written surface S2, so that the ink 8 in the chip body 321 does not move outside the chip body 321, and the transfer as described above is not performed.

Each image in the column of "writing line" in Figs. 15 and 16 shows an image of a writing line in a case where a normal writing operation is performed on each sample by the active stylus pen 1.

From these images, in the case of the samples Nos. 1 to 14, it can be confirmed that almost no ink is transferred to the written surface. That is, in the case of the samples Nos. 1 to 14, it is considered that the ball 322 has not rolled.

In addition, in the case of the sample Nos. 15 to 19, it is possible to confirm that the ink is transferred to the written surface and the writing line is drawn. That is, in the case of the samples Nos. 15 to 19, it is considered that the ball 322 rolls.

Therefore, for example, even in a case where the ball 322 is moved to the second written surface S2 having a relatively small dynamic friction coefficient, such as a desk surface, in an excessive manner from the first written surface S1 while writing on the first written surface S1, such as paper, it is possible to prevent the second written surface S2 from being stained with the ink 8.

In addition, in a case where the active stylus pen 1 is configured as an input pen (may be referred to as a stylus pen) capable of performing an input operation on a touch panel display, writing with the ink 8 is possible on a first written surface S1, such as a paper surface, while writing with the ink 8 is not performed on a second written surface S2, such as a touch panel display, having a relatively small dynamic friction coefficient. Therefore, it is possible to prevent the touch panel display from being stained with the ink 8.

### [Modification Example 19]

In the above-described Embodiment 14, the chip 32 that is provided such that the ball 322 rolls on the first written surface S1 and does not roll on the second written surface S2, which has physical properties different from the first written surface S1, is used as the core body of the active stylus pen 1 formed of a conductive material. However, the chip 32 can also be used for a ballpoint pen, which is a normal writing utensil that cannot be used as the active stylus pen.

In this case, the chip 32 can also exhibit an effect of preventing erroneous writing on a display or the like during the use of the ballpoint pen.

The ballpoint pen may be any form of a ballpoint pen in which the chip 32 is fixed to the tip of the tubular case 2, a ballpoint pen in which the chip 32 appears and disappears from the tip of the tubular case 2, a ballpoint pen refill constituting a multi-color writing utensil in which a plurality of ballpoint pen refills can be selectively used, a ballpoint pen refill constituting a multifunctional writing utensil in which a plurality of types of writing utensils such as a ballpoint pen and a mechanical pencil can be selectively used, or the like.

In the above description, the active stylus pen 1 of Embodiment 14 according to the present invention and the ballpoint pen of Modification Example 19 thereof have been described in detail with reference to the drawings. However, the specific configuration is not limited to the embodiments, and the present invention includes design changes and the like without departing from the gist of the present invention.

In addition, the respective embodiments described above can be combined with each other by using the technology of each other unless there is a particular contradiction or problem in the purpose, the configuration, and the like.

In the above description, Embodiments 1 and 2 according to the present invention and the modification examples thereof, Embodiments 3, 4, 5, and 6, Modification Example 10, Embodiment 7 and Modification Examples 11 to 13, Embodiment 8 and Modification Examples 14 and 15, Embodiment 9 and Modification Example 16, Embodiments 10 and 11 and Modification Example 17, Embodiment 12 and Modification Example 18, Embodiment 13, and Embodiment 14 and Modification Example 19 have been described in detail with reference to the drawings. However, the specific configuration is not limited to these embodiments, and the present invention includes design changes and the like within a range not departing from the gist of the present invention.

In addition, the respective embodiments described above can be combined with each other by using the technology of each other unless there is a particular contradiction or problem in the purpose, the configuration, and the like.

### [Other Embodiments]

(1) An active stylus pen transmitting a signal to a chip provided at a tip of a refill of a ballpoint pen.
(2) The active stylus pen according to (1), in which at least a part of an ink tank of the refill is formed of a conductive member, and the signal is transmitted to the chip via the ink tank.
(3) The active stylus pen according to (1) or (2), in which the signal is transmitted to the chip via the conductive member disposed in the ink tank of the refill.
(4) The active stylus pen according to any one of (1) to (3), in which the signal is transmitted to the chip via a conductive member disposed outside the refill.
(5) The active stylus pen according to any one of (1) to (4), in which an ink and grease in an ink tank of the refill contain a conductive material, and the signal is transmitted to the chip via the ink and the grease containing the conductive material.
(6) The active stylus pen according to any one of (1) to (5), including: a mechanism that allows the refill to appear and disappear.
(7) An active stylus pen transmitting a signal to a guide pipe provided at a tip of a mechanical pencil.
(8) The active stylus pen according to (7), in which at least a part of a pencil lead tank of the mechanical pencil is formed of a conductive member, and the signal is transmitted to the guide pipe via the pencil lead tank.
(9) The active stylus pen according to (7) or (8), in which the signal is transmitted to the guide pipe via the conductive member disposed in the pencil lead tank of the mechanical pencil.
(10) The active stylus pen according to any one of (7) to (9), in which the signal is transmitted to the guide pipe via a conductive member disposed outside a pencil lead tank of the mechanical pencil.
(11) An active stylus pen transmitting a signal to a chip provided at a tip of a refill of a ballpoint pen and/or a guide pipe provided at a tip of a mechanical pencil of a multicolor pen or a multifunctional writing utensil that is capable of selectively using one of the two or more ballpoint pens or mechanical pencils.
(12) The active stylus pen according to (11), in which at least a part of an ink tank of the refill or a pencil lead tank of the mechanical pencil is formed of a conductive member, and the signal is transmitted to the chip or the guide pipe via the ink tank or the pencil lead tank, respectively.
(13) The active stylus pen according to (11) or (12), in which the signal is transmitted to the chip or the guide pipe via the conductive member disposed in the ink tank of the refill or the pencil lead tank of the mechanical pencil, respectively.
(14) The active stylus pen according to any one of (11) to (13), in which the signal is transmitted to the chip or the guide pipe via a conductive member disposed outside an ink tank of the refill or a pencil lead tank of the mechanical pencil, respectively.
(15) The active stylus pen according to any one of (11) to (14), in which an ink and grease in an ink tank of the refill contain a conductive material, and the signal is transmitted to the chip via the ink and the grease containing the conductive material.
(16) The active stylus pen according to any one of (1) to (15), in which one of a plurality of different communication standards of a plurality of different functions is selectable and usable, and
   the active stylus pen includes a plurality of slide switches for selecting one of the plurality of different communication standards or the plurality of different functions on a peripheral surface of a tubular case.
(17) The active stylus pen according to (16), including: a knock button at a rear end portion of the tubular case, in which the active stylus pen is turned on/off by the knock button.
(18) The active stylus pen according to (17), including: a binder clip on the peripheral surface of the tubular case, in which the knock button is returned to an OFF position by a binder operation of the binder clip.
(19) The active stylus pen according to (16), in which the active stylus pen is turned on by sliding at least one of the slide switches.
(20) The active stylus pen according to (19), in which the active stylus pen is turned off by returning all the slide switches to original positions.
(21) The active stylus pen according to (16), including: a rotary switch that turns on/off the active stylus pen by rotating a part of the tubular case in a circumferential direction.
(22) The active stylus pen according to (21), including: a binder clip on the peripheral surface of the tubular case, in which the rotary switch is returned to an OFF position by a binder operation of the binder clip.
(23) The active stylus pen according to any one of (16) to (22), in which one of the slide switches is slid to return other slide switches that have already been slid to original positions, and/or the active stylus pen includes a binder clip on the peripheral surface of the tubular case, and all of the slide switches return to original positions by a binder operation of the binder clip.
(24) The active stylus pen according to any one of (16) to (23), in which the chip or a guide pipe appears and disappears from a tip portion of the tubular case by sliding the slide switch.
(25) The active stylus pen according to any one of (1) to (15), in which one of a plurality of different communication standards or one of a plurality of different functions is selectable and usable, and
   the active stylus pen includes a rotary switch for selecting one of the plurality of different communication standards or one of the plurality of different functions by rotating a part of a tubular case in a circumferential direction.
(26) The active stylus pen according to (25), including: a knock button at a rear end portion of the tubular case, in which the active stylus pen is turned on/off by the knock button.
(27) The active stylus pen according to (26), including: a binder clip on a peripheral surface of the tubular case, in which the knock button is returned to an OFF position by a binder operation of the binder clip.
(28) The active stylus pen according to (25), in which the active stylus pen is turned on by providing an OFF position in the rotary switch and rotating the rotary switch from the OFF position.
(29) The active stylus pen according to (28), including: a binder clip on a peripheral surface of the tubular case, in which the rotary switch is returned to the OFF position by a binder operation of the binder clip.
(30) The active stylus pen according to any one of (25) to (29), in which the chip or a guide pipe appears and disappears from a tip portion of the tubular case by a rotation of the rotary switch.
(31) The active stylus pen according to any one of (1) to (6) and (11) to (15), in which the chip includes a substantially tubular chip body, and a ball that is rotatably held on a front end side of the chip body and a part of which is exposed forward from the chip body, rolls the ball on a written surface to transfer an ink supplied into the chip body from the ball to the written surface, and provides the ball such that the ball rolls on a first written surface and does not roll on a second written surface having physical properties different from the first written surface.
(32) The active stylus pen according to (31), in which a roughness of the second written surface is smaller than a roughness of the first written surface.
(33) The active stylus pen according to (31), in which the second written surface has a maximum valley depth Sv of less than 14 µm.
(34) The active stylus pen according to any one of (31) to (33), in which the second written surface has a smaller value of a dynamic friction coefficient than the first written surface, and
   the dynamic friction coefficient is a dynamic friction coefficient in a case where a writing operation is performed using an experimental chip that holds an experimental ball having a diameter of 0.7 mm in an unrotatable manner under conditions of a writing speed of 25 mm/s, a writing angle of 70 degrees, and a writing load of 200 g.
(35) The active stylus pen according to (34), in which the dynamic friction coefficient of the second written surface is less than 0.45.
(36) The active stylus pen according to any one of (31) to (35), in which a surface roughness of an outer peripheral surface of the ball is set to be equal to or greater than Ra 3 nm.
(37) The active stylus pen according to any one of (31) to (36), in which the ball is held on the front end side of the chip body to move within a range of 0.025 mm or less in an axial direction of the chip body.
(38) The active stylus pen according to any one of (31) to (37), in which an inner part of the chip body is provided with a receive surface that receives the ball from a rear side, and a contact area between the ball and the receive surface is 0.2 mm² or less.
(39) The active stylus pen according to any one of (31) to (38), in which the ball is formed of a conductive material.
(40) The active stylus pen according to any one of (31) to (39), in which the ball and the chip body are formed of a conductive material and conductive to each other.
(41) A design method of the active stylus pen according to any one of (1) to (6), (11) to (15), and (31) to (40) in which the chip includes a substantially tubular chip body, and a ball that is rotatably held on a front end side of the chip body and a part of which is exposed forward from the chip body and rolls the ball on a written surface to transfer an ink supplied into the chip body from the transfer ball to the written surface, the method including:
   providing the ball such that the ball rolls on a first written surface and does not roll on a second written surface having physical properties different from the first written surface.
(42) A pen-type input device capable of selecting and using one of a plurality of different communication standards or one of a plurality of different functions, the pen-type input device including:
   a plurality of slide switches for selecting one of the plurality of different communication standards or one of the plurality of different functions on a peripheral surface of a tubular case.
(43) The pen-type input device according to (42), including: a knock button at a rear end portion of the tubular case, in which the pen-type input device is turned ON/OFF by the knock button.
(44) The pen-type input device according to (43), including: a binder clip on a peripheral surface of the tubular case, in which the knock button is returned to the OFF position by a binder operation of the binder clip.
(45) The pen-type input device according to (42), in which the pen-type input device is turned on by sliding at least one of the slide switches.
(46) The pen-type input device according to (45), in which the pen-type input device is turned off by returning all the slide switches to the original positions.
(47) The pen-type input device according to (42), including: a rotary switch that turns the pen-type input device ON/OFF by rotating a part of the tubular case in a circumferential direction.
(48) The pen-type input device according to (47), including: a binder clip on a peripheral surface of the tubular case, in which the rotary switch is returned to the OFF position by a binder operation of the binder clip.
(49) The pen-type input device according to any one of (42) to (48), in which in a case where one of the slide switches is slid, the other slide switch that has already been slid returns to an original position, and/or the pen-type input device includes a binder clip on a peripheral surface of the tubular case, and all the slide switches return to the original position by a binder operation of the binder clip.
(50) The pen-type input device according to any one of (42) to (49), in which the pen-type input device includes a core body at a tip portion of the tubular case, and
   the core body is a writing utensil, and an electric field is generated at a tip of the writing utensil.
(51) The pen-type input device according to (50), in which the writing utensil is a ballpoint pen, and the tip is a chip.
(52) The pen-type input device according to (50), in which the writing utensil is a mechanical pencil, and the tip is a guide pipe.
(53) The pen-type input device according to (50), in which the writing utensil is a multicolor pen or a multifunctional writing utensil that can selectively use one of two or more ballpoint pens or mechanical pencils,
   the tip is a chip of the ballpoint pen or a guide pipe of the mechanical pencil, and
   the writing utensil used for writing appears and disappears from a tip portion of the tubular case by sliding of the slide switch.
(54) A pen-type input device that can select and use one of a plurality of different communication standards or a plurality of different functions, the pen-type input device including:
   a rotary switch that selects one of the plurality of different communication standards or one of the plurality of different functions by rotating a part of a tubular case in a circumferential direction.
(55) The pen-type input device according to (54), including: a knock button at a rear end portion of the tubular case, in which the pen-type input device is turned on/off by the knock button.
(56) The pen-type input device according to (55), including: a binder clip on a peripheral surface of the tubular case, in which the knock button is returned to an OFF position by a binder operation of the binder clip.
(57) The pen-type input device according to (54), in which the pen-type input device is turned on by providing an OFF position in the rotary switch and rotating the rotary switch from the OFF position.
(58) The pen-type input device according to (57), including: a binder clip on a peripheral surface of the tubular case, in which the rotary switch is returned to the OFF position by a binder operation of the binder clip.
(59) The pen-type input device according to any one of (54) to (58), in which the pen-type input device includes a core body at a tip portion of the tubular case, and
   the core body is a writing utensil, and an electric field is generated at a tip of the writing utensil.
(60) The pen-type input device according to (59), in which the writing utensil is a ballpoint pen, and the tip is a chip.
(61) The pen-type input device according to (59), in which the writing utensil is a mechanical pencil, and the tip is a guide pipe.
(62) The pen-type input device according to (59), in which
   the writing utensil is a multicolor pen or a multifunctional writing utensil that can selectively use one of two or more ballpoint pens or mechanical pencils,
   the tip is a chip of the ballpoint pen or a guide pipe of the mechanical pencil, and
   the writing utensil used for writing appears and disappears from a tip portion of the tubular case by rotation of the rotary switch.
(63) A ballpoint pen chip including: a chip body that has a substantially tubular shape; and a ball that is rotatably held on a front end side of the chip body and a part of which is exposed in front of the chip body, in which the ball is rolled on a written surface, and ink supplied into the chip body is transferred from the ball to the written surface, and
   the ball is provided to roll on a first written surface and not to roll on a second written surface having physical properties different from those of the first written surface.
(64) The ballpoint pen chip according to (63), in which a roughness of the second written surface is smaller than a roughness of the first written surface.
(65) The ballpoint pen chip according to (63) or (64), in which the second written surface has a maximum valley depth Sv of less than 14 µm.
(66) The ballpoint pen chip according to any one of (63) to (65), in which the second written surface is a surface has smaller value of a dynamic friction coefficient than the first written surface, and
   the dynamic friction coefficient is a dynamic friction coefficient in a case where a writing operation is performed using an experimental ballpoint pen chip in which an experimental ball having a diameter of 0.7 mm is held in an unrotatable manner under conditions of a writing speed of 25 mm/s, a writing angle of 70 degrees, and a writing load of 200 g.
(67) The ballpoint pen chip according to (66), in which the dynamic friction coefficient of the second written surface is less than 0.45.
(68) The ballpoint pen chip according to any one of (63) to (67), in which a surface roughness of an outer peripheral surface of the ball is set to Ra of 3 nm or more.
(69) The ballpoint pen chip according to any one of (63) to (68), in which the ball is held on a front end side of the chip body to move within a range of 0.025 mm or less in an axial direction of the chip body.
(70) The ballpoint pen chip according to any one of (63) to (69), in which an inner part of the chip body is provided with a receive surface that receives the ball from a rear side, and a contact area between the ball and the receive surface is 0.2 mm² or less.
(71) The ballpoint pen chip according to any one of (63) to (70), in which the ball is formed of a conductive material.
(72) The ballpoint pen chip according to any one of (63) to (71), in which the ball and the chip body are formed of a conductive material and are conductive.
(73) A ballpoint pen in which the ballpoint pen chip according to any one of (63) to (72) is provided on an end portion side of the shaft tube to constitute an input pen.
(74) A design method of a ballpoint pen chip including a chip body that has a substantially tubular shape, and a ball that is rotatably held on a front end side of the chip body and a part of which is exposed in front of the chip body, in which the ball is rolled on a written surface, and ink supplied into the chip body is transferred from the ball to the written surface, the design method including:
   providing the transfer ball to roll on a first written surface and not to roll on a second written surface having physical properties different from those of the first written surface.

### REFERENCE SYMBOLS LIST

1: active stylus pen
1': pen-type input device
2: tubular case
21: front side case
22: rear side case
2a: clip
3: refill
31: ink tank
311: layer
312: linear or band-shaped layer
32: chip (ballpoint pen chip)
321: chip body
321a: tip edge
321b: tubular inner surface
321c: receive surface
321d: ink guide groove
321e: ink guide hole
322: ball
323: spring
323a: rod-like portion
324: lock portion
33: connecting member
331: check valve
4: electric circuit portion
5: peripheral electrode
51: extension portion
6: ground electrode
7: signal transmitting member
71: chuck
72: conduction portion
8: ink
91: main switch
92: slide switch
93: rotary switch
931: window portion
F: grease (follower)
G: gap
S1: first written surface
S2: second written surface

## Claims

1. An active stylus pen transmitting a signal to a chip provided at a tip of a refill of a ballpoint pen.

2. The active stylus pen according to Claim 1, wherein
at least a part of an ink tank of the refill is formed of a conductive member, and
the signal is transmitted to the chip via the ink tank.

3. The active stylus pen according to Claim 2, wherein
the signal is transmitted to the chip via the conductive member disposed in the ink tank of the refill.

4. The active stylus pen according to Claim 1, wherein
the signal is transmitted to the chip via a conductive member disposed outside the refill.

5. The active stylus pen according to Claim 1, wherein
ink and grease in an ink tank of the refill contain a conductive material, and
the signal is transmitted to the chip via the ink and the grease containing the conductive material.

6. The active stylus pen according to any one of Claims 2 to 5, comprising:
a mechanism that allows the refill to appear and disappear.

7. An active stylus pen transmitting a signal to a guide pipe provided at a tip of a mechanical pencil.

8. The active stylus pen according to Claim 7, wherein
at least a part of a pencil lead tank of the mechanical pencil is formed of a conductive member, and
the signal is transmitted to the guide pipe via the pencil lead tank.

9. The active stylus pen according to Claim 8, wherein
the signal is transmitted to the guide pipe via the conductive member disposed in the pencil lead tank of the mechanical pencil.

10. The active stylus pen according to Claim 7, wherein
the signal is transmitted to the guide pipe via a conductive member disposed outside a pencil lead tank of the mechanical pencil.

11. An active stylus pen transmitting a signal to a chip provided at a tip of a refill of a ballpoint pen and/or a guide pipe provided at a tip of a mechanical pencil of a multicolor pen or a multifunctional writing utensil that is capable of selectively using one of the two or more ballpoint pens or mechanical pencils.

12. The active stylus pen according to Claim 11, wherein
at least a part of an ink tank of the refill or a pencil lead tank of the mechanical pencil is formed of a conductive member, and
the signal is transmitted to the chip or the guide pipe via the ink tank or the pencil lead tank, respectively.

13. The active stylus pen according to Claim 12, wherein
the signal is transmitted to the chip or the guide pipe via the conductive member disposed in the ink tank of the refill or the pencil lead tank of the mechanical pencil, respectively.

14. The active stylus pen according to Claim 11,
wherein the signal is transmitted to the chip or the guide pipe via a conductive member disposed outside an ink tank of the refill or a pencil lead tank of the mechanical pencil, respectively.

15. The active stylus pen according to Claim 11, wherein
an ink and grease in an ink tank of the refill contain a conductive material, and
the signal is transmitted to the chip via the ink and the grease containing the conductive material.

16. The active stylus pen according to Claim 1, 7, or 11, wherein
one of a plurality of different communication standards of a plurality of different functions is selectable and usable, and
the active stylus pen comprises a plurality of slide switches for selecting one of the plurality of different communication standards or the plurality of different functions on a peripheral surface of a tubular case.

17. The active stylus pen according to Claim 16, comprising:
a knock button at a rear end portion of the tubular case, wherein
the active stylus pen is turned on/off by the knock button.

18. The active stylus pen according to Claim 17, comprising:
a binder clip on the peripheral surface of the tubular case, wherein
the knock button is returned to an OFF position by a binder operation of the binder clip.

19. The active stylus pen according to Claim 16, wherein
the active stylus pen is turned on by sliding at least one of the slide switches.

20. The active stylus pen according to Claim 19, wherein
the active stylus pen is turned off by returning all the slide switches to original positions.

21. The active stylus pen according to Claim 16, comprising:
a rotary switch that turns on/off the active stylus pen by rotating a part of the tubular case in a circumferential direction.

22. The active stylus pen according to Claim 21, comprising:
a binder clip on the peripheral surface of the tubular case, wherein
the rotary switch is returned to an OFF position by a binder operation of the binder clip.

23. The active stylus pen according to Claim 16, wherein
one of the slide switches is slid to return other slide switches that have already been slid to original positions, and/or
the active stylus pen comprises a binder clip on the peripheral surface of the tubular case, and all of the slide switches return to original positions by a binder operation of the binder clip.

24. The active stylus pen according to Claim 16, wherein
the chip or a guide pipe appears and disappears from a tip portion of the tubular case by sliding the slide switch.

25. The active stylus pen according to Claim 1, 7, or 11, wherein
one of a plurality of different communication standards or one of a plurality of different functions is selectable and usable, and
the active stylus pen comprises a rotary switch for selecting one of the plurality of different communication standards or one of the plurality of different functions by rotating a part of a tubular case in a circumferential direction.

26. The active stylus pen according to Claim 25, comprising:
a knock button at a rear end portion of the tubular case, wherein
a pen-type input device is turned on/off by the knock button.

27. The active stylus pen according to Claim 26, comprising:
a binder clip on a peripheral surface of the tubular case, wherein
the knock button is returned to an OFF position by a binder operation of the binder clip.

28. The active stylus pen according to Claim 25, wherein
a pen-type input device is turned on by providing an OFF position in the rotary switch and rotating the rotary switch from the OFF position.

29. The active stylus pen according to Claim 28, comprising:
a binder clip on a peripheral surface of the tubular case, wherein
the rotary switch is returned to the OFF position by a binder operation of the binder clip.

30. The active stylus pen according to Claim 25, wherein
the chip or a guide pipe appears and disappears from a tip portion of the tubular case by a rotation of the rotary switch.

31. The active stylus pen according to Claim 1 or 11, wherein
the chip includes a substantially tubular chip body, and a ball that is rotatably held on a front end side of the chip body and a part of which is exposed forward from the chip body, rolls the ball on a written surface to transfer an ink supplied into the chip body from the ball to the written surface, and provides the ball such that the ball rolls on a first written surface and does not roll on a second written surface having physical properties different from the first written surface.

32. The active stylus pen according to Claim 31, wherein
a roughness of the second written surface is smaller than a roughness of the first written surface.

33. The active stylus pen according to Claim 31, wherein
the second written surface has a maximum valley depth Sv of less than 14 µm.

34. The active stylus pen according to Claim 31, wherein
the second written surface has a smaller value of a dynamic friction coefficient than the first written surface, and
the dynamic friction coefficient is a dynamic friction coefficient in a case where a writing operation is performed using an experimental chip that holds an experimental ball having a diameter of 0.7 mm in an unrotatable manner under conditions of a writing speed of 25 mm/s, a writing angle of 70 degrees, and a writing load of 200 g.

35. The active stylus pen according to Claim 34, wherein
the dynamic friction coefficient of the second written surface is less than 0.45.

36. The active stylus pen according to Claim 31, wherein
a surface roughness of an outer peripheral surface of the ball is set to be equal to or greater than Ra 3 nm.

37. The active stylus pen according to Claim 31, wherein
the ball is held on the front end side of the chip body to move within a range of 0.025 mm or less in an axial direction of the chip body.

38. The active stylus pen according to Claim 31, wherein
an inner part of the chip body is provided with a receive surface that receives the ball from a rear side, and
a contact area between the ball and the receive surface is 0.2 mm² or less.

39. The active stylus pen according to Claim 31, wherein
the ball is formed of a conductive material.

40. The active stylus pen according to Claim 31, wherein
the ball and the chip body are formed of a conductive material and conductive to each other.

41. A design method of the active stylus pen according to Claim 1 or 11 wherein
the chip includes: a substantially tubular chip body; and a ball that is rotatably held on a front end side of the chip body and a part of which is exposed forward from the chip body, and rolls the ball on a written surface to transfer an ink supplied into the chip body from the ball to the written surface, the method comprising:
providing the ball such that the ball rolls on a first written surface and does not roll on a second written surface having physical properties different from the first written surface.
